(19) Europäisches Patentamt
European Patent Office
Office européen des brevets

(11) **EP 2 053 732 B1**

(12) **EUROPÄISCHE PATENTSCHRIFT**

(45) Veröffentlichungstag und Bekanntmachung des Hinweises auf die Patenterteilung:
**14.09.2016 Patentblatt 2016/37**

(51) Int Cl.:
***H02M 7/5387*** (2007.01)

(21) Anmeldenummer: **08008016.1**

(22) Anmeldetag: **25.04.2008**

(54) **Schaltungsanordnung und Steuerungsverfahren für einen Wechselrichter mit Hochsetzsteller**

Switch assembly and actuating method for an inverter with boost converter

Agencement de commutation et procédé de commande pour un onduleur doté d'un transformateur élévateur de tension

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **06.06.2007 DE 102007026393**

(43) Veröffentlichungstag der Anmeldung:
**29.04.2009 Patentblatt 2009/18**

(73) Patentinhaber: **REFU Elektronik GmbH 72555 Metzingen (DE)**

(72) Erfinder:
• **Hantschel, Jochen**
**72581 Dettingen (DE)**
• **Knoll, Michael**
**89075 Ulm (DE)**

(74) Vertreter: **Daub, Thomas et al**
**Patent- und Rechtsanwaltskanzlei Daub**
**Bahnhofstrasse 5**
**88662 Überlingen (DE)**

(56) Entgegenhaltungen:
EP-A1- 1 035 640      DE-A1- 10 020 537
DE-A1- 10 221 592      US-A1- 2006 250 831

**EP 2 053 732 B1**

**Beschreibung**

Die Erfindung betrifft einen Wechselrichter und ein Verfahren zur Umwandlung einer elektrischen Gleichspannung in eine Wechselspannung einer bestimmten Frequenz.

Wechselrichter werden z.B. dann eingesetzt, wenn elektrische Energie aus Gleichspannungsquellen, wie bspw. Fotovoltaikanlagen, Brennstoffzellen oder dgl. in das öffentliche Versorgungsnetz einzuspeisen ist. Dabei gilt es, aus einem Gleichspannungspotenzial einen Wechselstrom zu erzeugen, der an die Phase und Amplitude bspw. einer sinusförmigen Netzspannung mit einer Frequenz von 50 oder 60 Hz angepasst ist. Zu diesem Zweck sind ein- und dreiphasige Wechselrichter mit und ohne Transformator bekannt. Transformatorlose Wechselrichter haben einen höheren Wirkungsgrad, der auf geringere Energieverluste in dem Wechselrichter zurückzuführen ist. Der Wirkungsgrad des Wechselrichters bestimmt den gesamten Wirkungsgrad und somit die Wirtschaftlichkeit bspw. einer Fotovoltaikanlage in erheblichem Maße und sollte möglichst hoch sein.

DE 102 21 592 A1 beschreibt einen transformatorlosen Wechselrichter mit zwei Gleichspannungsanschlüssen, einer H-förmigen Vollbrückenschaltung, die vier Halbleiterschalter aufweist, und Speicherdrosseln, die in den zu den Wechselspannungsanschlüssen führenden Abzweigen der Brückenhälften angeordnet sind. Zur Erzeugung der gewünschten Wechselspannung aus einer anliegenden Gleichspannung werden bestimmte Schalter der Vollbrücke in Abhängigkeit von der Polarität der Wechselspannung mit einer hohen Taktfrequenz pulsweitenmoduliert geschaltet, um im Schließzustand der Schalter, der sog. Aufmagnetisierungsphase, einen Strom zur Aufladung der Drosselspulen bereitzustellen. Beim Öffnen der hochfrequent getakteten Schalter, der sog. Freilaufphase, kommutiert der aufgrund der Abmagnetisierung innerhalb der Drosseln weiter fließende Spulenstrom auf gesonderte Freilaufpfade, die zwischen den Abzweigen der Brückenhälften vorgesehen sind.

Die bekannte Wechselrichterschaltung ist zur Einspeisung von Energie in ein Netz geeignet. Allerdings müssen die auf der Gleichspannungsseite anliegenden Gleichspannungen wenigstens den Betrag des Scheitelwerts der Netzspannung aufweisen. Ansonsten reicht die Spannung zur Aufmagnetisierung der Drosselspule und somit zur Erzeugung des gewünschten Wechselstromes oder der gewünschten Wechselspannung nicht aus. Die Höhe der zugeführten Gleichspannung ist jedoch insbesondere beim Anschluss regenerativer Energiequellen, z.B. Fotovoltaikgeneratoren, nicht in jedem Betriebspunkt sichergestellt. Ein Fotovoltaikgenerator ist aus mehreren Modulen aufgebaut, die jeweils eine Reihenschaltung von mehreren Generatorzellen mit einer Nennspannung von bspw. 0,7 bis 0,8 Volt aufweisen. Die von den Zellen gelieferte Spannung variiert herstellungs- und betriebsbedingt, insbesondere in Abhängigkeit von der Umgebungstemperatur und der Einstrahlleistung, bspw. je nach Abschattung, sowie abhängig von dem Alter bzw. der Nutzungsdauer der Zellen, in erheblichem Maße. Umso größer ist die gesamte Spannungsvarianz der Module und Generatoren. Eine beliebige Erhöhung der Anzahl der Generatormodule zur Erzielung einer Generatorspannung, die für die meisten Betriebspunkte ausreicht, ist aufgrund der begrenzten Durchschlagfestigkeit der eingangsseitigen Speicherkondensatoren nicht möglich und aus Kostengründen wenig sinnvoll.

Nachdem die einzelnen Generatorzellen zunehmend effektiver arbeiten und immer mehr Strom produzieren, besteht sogar im Gegenteil der Trend, immer weniger Zellen in Reihe zueinander zu schalten, um eine gewünschte Einspeiseleistung zu erreichen. Dadurch sinkt aber wiederum die zur Verfügung stehende Generatorspannung.

Es ist deshalb bekannt, Energiequellen, deren Gleichspannungspegel in bestimmten Betriebspunkten unterhalb des Netzscheitelwerts liegt, über einen sog. DC/DC-Steller an eine Wechselrichterschaltung anzuschließen. Ein DC/DC-Hochsetzsteller, der auch als Gleichstromsteller oder getakteter Spannungswandler bezeichnet wird, ist eine elektronische Schaltung, die eine eingangsseitige Gleichspannung in eine betragsmäßig größere Ausgangsspannung wandelt. Hochsetzsteller sind in unterschiedlichen Ausführungsformen allgemein bekannt. Bspw. sind induktive Wandler bekannt, die zur Energiespeicherung eine Spule benutzen, die über einen schließbaren Schalter geladen wird. Beim geöffneten Schalter entlädt sich die Spule über eine in Reihe angeschlossene Diode, um im Magnetfeld der Spule gespeicherte Energie an einen Verbraucher abzugeben.

Wenn Hochsetzsteller in einer Wechselrichterschaltung eingesetzt werden, führt dies zwangsläufig zu einer Verschlechterung des Wirkungsgrads. Dieser ist umso schlechter, je größer der Hochsetzsteller dimensioniert ist und je höher die Belastung, also der von dem Hochsetzsteller abgegebene Strom ist, wobei die Verluste näherungsweise proportional zur zweiten Potenz der Stromstärke sind. Der hohe Spannungspegel am Ausgang des Hochsetzstellers hat in einer Wechselrichterschaltung hohe Verluste zur Folge. Am Ausgang der Brückenschaltung entstehen hohe Potenzialsprünge zwischen aufeinanderfolgenden Aufmagnetisierungs- und Freilaufphasen mit der Folge hoher Schaltverluste und großer Rippelströme und Ummagnetisierungsverluste innerhalb der Speicherdrossel. Außerdem sind stark dimensionierte Hochsetzsteller verhältnismäßig kostspielig.

Aus der DE 100 20 537 A1 ist ein Solarwechselrichter mit einer Vollbrücke bekannt, bei dem eingangsseitig vor der Vollbrücke zumindest zwei Gleichspannungsquellen vorgesehen sind. In einer Ausführungsform wird die zumindest eine weitere Gleichspannung aus der Eingangsgleichspannung mittels eines Hochsetzstellers gewonnen. Hierzu ist der Hochsetzsteller in einer Zweigleitung angeordnet, die zwischen einer Eingangsklemme und einem Verbindungspunkt der oberen Schalter der Vollbrücke angeschlossen ist. An dem Ausgang des Hochsetzstellers ist ein zusätzlicher Schalter vorgesehen. Parallel zu der Reihenschaltung aus dem Hochsetzsteller und dem zusätzlichen Schalter ist in einem Gleichspannungszweig eine Diode angeordnet. Die Netzwechselspannung ist an Abzweigen angeschlossen, die jeweils mit einer der Halbbrücken der Vollbrücke zwischen dem oberen und dem unteren Schalter über einen Verbindungsknoten verbunden sind, wobei in einem Abzweig eine Speicherdrossel zur Spannungsglättung vorgeschaltet ist.

Solange im Betrieb der Betrag der Netzwechselspannung kleiner ist als die Eingangsgleichspannung, sperrt der zusätzliche Schalter am Ausgang des Hochsetzstellers, während die Diode in dem Gleichspannungszweig leitend ist. Während einer Halbwelle der Netzwechselspannung takten jeweils ein oberer Schalter einer der Halbbrücken und ein unterer Schalter der anderen Halbbrücke, während die Schalter auf der anderen Brückendiagonale gesperrt sind. In einer anderen Halbwelle werden die Schalter auf der anderen Brückendiagonale getaktet.

Wenn die Netzwechselspannung betragsmäßig größer ist als die Eingangsgleichspannung, werden die zuvor getakteten Schalter dauernd leitend geschaltet, während der Schalter am Ausgang des Hochsetzstellers hochfrequent getaktet wird. Somit fließt der Strom zur Aufmagnetisierung der Speicherdrossel von dem Hochsetzsteller über den zusätzlichen Schalter an seinem Ausgang und die beiden Schalter auf der aktiven Brückendiagonale, während im geöffnetem Zustand des zusätzlichen Schalters am Ausgang des Hochsetzstellers ein Freilaufstrom über die Diode in dem Gleichspannungszweig fließt.

Diese Schaltung ergibt den Vorteil, dass der Hochsetzstelle nur bei Bedarf, zeitweilig eingesetzt wird, wenn die Eingangsspannung kein ausreichendes Aufmagnetisierungspotenzial liefert. Dabei sind die Schaltspannungen an dem Schalter am Ausgang des Hochsetzstellers und an der Freilaufdiode in dem Gleichspannungszweig auf die Differenzspannung zwischen dem Ausgangspotenzial des Hochsetzstellers und dem Potenzial der Eingangsgleichspannung begrenzt. Somit sind Schalt- und Ummagnetisierungsverluste gering. Allerdings sind in den Aufmagnetisierungsphasen, in denen der Schalter am Ausgang des Hochsetzstellers geschlossen ist, in dem Strompfad nun drei Halbleiterschalter leitend, die entsprechende Durchlassverluste hervorrufen. Diese Verluste sind insofern nicht vernachlässigbar, als in dieser Phase des Schaltschemas auch die höchsten Ströme innerhalb der sinusförmigen Halbwelle der Netzwechselspannung vorliegen. Dadurch wird ein Teil der erzielten Wirkungsgradverbesserung wieder eingebüßt.

Ausgehend hiervon ist es Aufgabe der Erfindung, eine Wechselrichterschaltung und ein Verfahren zur Umwandlung einer Eingangsgleichspannung in eine Wechselspannung einer bestimmten Frequenz zu schaffen, die es ermöglichen, auch bei unzureichenden Eingangsgleichspannungswerten, insbesondere unter dem Scheitelwert der Netzwechselspannung, Energie mit hohem Wirkungsgrad in ein Netz einzuspeisen. Dabei sollen insbesondere Schalt- und Durchlassverluste sowie Ummagnetisierungsverluste und Rippelströme in der Speicherdrossel weitgehend reduziert werden.

Diese und weitere Aufgaben der vorliegenden Erfindung werden durch das erfindungsgemäße Verfahren mit den Merkmalen des Anspruchs 1 und den erfindungsgemäßen Wechselrichter nach Anspruch 18 gelöst.

Gemäß einem Aspekt der vorliegenden Erfindung ist ein Verfahren zur Umwandlung einer elektrischen Eingangsgleichspannung in eine Wechselspannung einer bestimmten Frequenz mittels einer Schaltungsanordnung geschaffen, zu der eine an die Eingangsgleichspannung angeschlossene Vollbrückenschaltung, die zwei zueinander parallele Halbbrücken mit jeweils einem ersten Schaltelement und einem in Reihe mit diesem verbundenen zweiten Schaltelement aufweist, Freilaufelemente, die Freilaufpfade definieren, und wenigstens eine Speicherdrossel gehören, die zwischen einem Brückenabgriff und einem Wechselspannungsanschluss angeschlossen ist, an den eine Wechselspannung mit einer bestimmten Frequenz angeschlossen werden kann. Die Schaltelemente werden in Abhängigkeit von der Polarität der Halbwellen der Wechselspannung mit festgelegtem Taktmuster geschaltet, wobei einzelne Schaltelemente synchron mit der Frequenz der Wechselspannung und andere Schalter mit hoher Taktfrequenz angesteuert werden. Insbesondere wird in einem normalen Betriebsmodus während einer Halbwelle jeweils ein erstes Schaltelement einer der Halbbrücken hochfrequent getaktet, während das zweite Schaltelement der anderen Halbbrücke geschlossen ist und die anderen Schaltelemente geöffnet sind. Im Schließzustand des hochfrequent getakteten Schalters, also in Aufmagnetisierungsphasen, wird über diesen ein Aufmagnetisierungsstrom zur Aufmagnetisierung der wenigstens einen Speicherdrossel bereitgestellt. Im Öffnungszustand dieses Schaltelementes, den Freilaufpfaden, fließt über ausgewählte Freilaufelemente ein Freilaufstrom, der eine Abmagnetisierung der Speicherdrossel ermöglicht.

Erfindungsgemäß wird an die Eingangsgleichspannung im Nebenschluss zu wenigstens einem der hochfrequent getakteten ersten Schaltelemente ein Spannungswandlerpfad angeschlossen, in dem eine Spannungswandlereinrichtung, die im Betrieb aus der Eingangsspannung ein betragsmäßig höheres Potenzial erzeugt, und ein an dem Ausgang der Spannungswandlereinrichtung vorgesehenes ansteuerbares Schaltmittel angeordnet ist.

Ferner werden erfindungsgemäß die momentanen Betriebsbedingungen erfasst, anhand derer festgestellt wird, ob die Speicherdrossel bei Anwendung des Taktmusters in den Aufmagnetisierungsphasen ausreichend aufmagnetisiert wird. In Abhängigkeit von dem Ergebnis dieser Feststellung wird der Betriebsmodus zur Ansteuerung der Schaltelemente geeignet gewählt. Wenn festgestellt wird, dass die Speicherdrossel in den Aufmagnetisierungsphasen ausreichend aufmagnetisiert werden kann, wird gemäß dem normalen Betriebsmodus in den Aufmagnetisierungsphasen das Gleichspannungspotenzial selbst zur Bereitstellung des Aufmagnetisierungstroms für die Speicherdrossel verwendet, d.h. bei entsprechender Schließung wenigstens eines hochfrequent getakteten Schaltelementes der Halbbrückenschaltung an die Speicherdrossel angekoppelt. In der Freilaufphase des normalen Betriebs, wenn das Schaltelement geöffnet ist, kommutiert der aufgrund der Abmagnetisierung innerhalb der Speicherdrossel weiter fließende Freilaufstrom auf einen gesonderten Freilaufpfad.

Wenn festgestellt wird, dass die Speicherdrossel in den Aufmagnetisierungsphasen nicht oder unzureichend aufmagnetisiert wird, wird ein erweiterter Betriebsmodus festgesetzt. In diesem Betriebsmodus wird das zuvor hochfrequent getaktete erste Schaltelement geschlossen bzw. aufgesteuert und stattdessen das Schaltmittel in dem Spannungswandlerpfad hochfrequent getaktet. Somit wird das aus dem Eingangsgleichspannungspotenzial erzeugte betragsmäßig höhere Ausgangspotenzial der Spannungswandlereinrichtung als Aufmagnetisierungspotenzial zur Bereitstellung des Ladestroms für die Speicherdrossel verwendet, d.h. an die Speicherdrossel angekoppelt. Durch die erfindungsgemäße Anordnung des Spannungswandlerpfades wird der Aufmagnetisierungsstrom vorteilhafterweise unter Umgehung des normalerweise hochfrequent getakteten und nun leitend geschalteten ersten Schaltelementes direkt der wenigstens einen Speicherdrossel zugeführt. In den Freilaufphasen fließt der Freilaufstrom hingegen aus dem Gleichspannungskreis durch dieses erste Schaltelement, so dass nicht der im normalen Betriebsmodus verwendete Freilaufpfad, sondern der im normalen Betriebsmodus verwendete Aufmagnetisierungspfad zur Bereitstellung des Freilaufstroms verwendet wird. Somit gibt in den Freilaufphasen das Eingangsgleichspannungspotenzial das Freilaufpotenzial vor.

Die Erfindung eignet sich insbesondere zur Anwendung für die Einspeisung von Energie in ein Netz, bspw. öffentliches Versorgungsnetz, mittels einer Fotovoltaikanlage. Die ersten Schaltelemente der Vollbrücke und die Schaltmittel der Spannungswandlereinrichtung werden vorzugsweise pulsweitenmoduliert im kHz-Bereich, vorzugsweise bei etwa 18 kHz oder mehr, getaktet, um am Ausgang der wenigstens einen Speicherdrossel einen an die Netzwechselspannung hinsichtlich Amplitude und Phase angepassten Strom zu liefern. Es können auch andere Gleichspannungsquellen, die ein variables Gleichspannungspotenzial liefern, wie bspw. Brennstoffzellen oder Akkumulatoren, eingesetzt werden. Spannungsvarianzen, die auf herstellungsbedingte Toleranzen, auf Temperaturdrift oder Abschattungseffekte im Betrieb sowie auf Alterung zurückzuführen sind, werden durch die Erfindung ohne weiteres ausgeglichen, indem bspw. das erhöhte Potenzial auf ein gewünschtes Niveau eingeregelt wird. Es kann ein weiterer Bereich variabler Gleichspannungspotenziale am Eingang verwendet werden, wobei die Gleichspannung auch deutlich unter dem Scheitelwert der Wechselspannung, bspw.

dem Scheitelwert von etwa $\sqrt{2}\cdot 230$ V oder

$\sqrt{2}\cdot 120$ V einer herkömmlichen Netzwechselspannung mit einer Frequenz von 50 oder 60 Hz, liegen kann. Es ist festgestellt worden, dass mit einer Gleichspannungsamplitude von wenigstens etwa einem Drittel des Scheitelwerts der Netzspannung ein wirkungsvoller Betrieb möglich ist. Somit ist die Erfindung auf einen weiten Eingangsspannungsbereich anwendbar.

Die Erfindung ermöglicht es, auch bei unzureichenden Generatorspannungen Energie mit hohem Wirkungsgrad in ein Netz einzuspeisen, wozu mehrere Maßnahmen vorgesehen sind: Bspw. ist der Einsatz des erhöhten Spannungspotenzials lediglich auf Zeiträume der Halbwelle beschränkt, in denen die Gleichspannung eines Generators kein ausreichendes Aufmagnetisierungspotenzial liefert. In den übrigen Zeiträumen wird die niedrigere Gleichspannung des Generators zur Aufmagnetisierung der Speicherdrossel verwendet. Durch die geringere Potenzialhöhe der Generatorspannung sind die Schaltverluste, Rippelströme und Eisenverluste in der Speicherdrossel und elektromagnetische Störungen im Vergleich zu einer Betriebsweise, bei der stets von dem erhöhten Potenzial, bspw. dem Ausgangspotenzial eines Hochsetzstellers, abgetaktet würde, deutlich reduziert. Ferner ist der Wirkungsgrad dadurch verbessert, dass bei nicht ausreichender Eingangsspannung in dem erweiterten Betriebsmodus zwar das erhöhte Potenzial das Aufmagnetisierungspotenzial, die Eingangsgleichspannung jedoch das Freilaufpotenzial vorgibt. Der Freilauf erfolgt über den Gleichspannungszweig direkt von dem Generator aus. Dies hat im Vergleich zu einem Freilauf, z.B. aus einem gegenüberliegenden Gleichspannungszweig einen geringeren Spannungshub auf dem Eingang der Speicherdrossel zur Folge. Der Spannungshub entspricht lediglich in etwa der Spannungsdifferenz zwischen dem Ausgangspotenzial der Spannungswandlereinrichtung und dem Potenzial der Eingangsgleichspannung. Durch das höhere Freilaufpotenzial erfolgt die Abmagnetisierung der Speicherdrossel wesentlich langsamer, wodurch vorteilhafterweise selbst in der Freilaufphase Energie ins Netz eingespeist wird. Außerdem werden dadurch Rippelströme und Ummagnetisierungsverluste innerhalb der Speicherdrossel ebenso wie EMV-Störungen drastisch reduziert. Durch die geringeren Spannungssprünge, die das Schaltmittel in dem Spannungswandlerzweig bei seiner hochfrequenten Taktung ausführen muss, fallen in diesem ebenso wie in einer gegebenenfalls in dem Gleichspannungszweig vorgesehenen Freilaufdiode nur geringe Schaltverluste an. Ferner kann die Leitenddauer des hochfrequent getakteten Schaltmittels im Bereich des Scheitelwertes der Halbwelle der Wechselspannung wirksam verringert werden, so dass über diesen eine geringere Energiemenge ins Netz gelangt und das Schaltmittel, wie auch die Spannungswandlereinrichtung, bspw. ein induktiver Hochsetzsteller, wesentlich kleiner ausgeführt werden können. Dadurch werden die Kosten der Bauteile und die durch diese hervorgerufenen Durchlassverluste reduziert.

Außerdem sind durch die erfindungsgemäße Anordnung des Spannungswandlerpfades und das erfindungsgemäße Schaltschema die Durchlassverluste reduziert. Die zum Teil hohen Aufmagnetisierungsströme fließen in dem erweiterten Betriebsmodus an dem normalerweise hochfrequent getakteten ersten Schaltelement vorbei und somit nur über zwei Halbleiterschalter, so dass eine Halbleiterstrecke eingespart wird. Damit kann in diesem Abschnitt der sinusförmigen Halbwelle der Netzwechselspannung, in dem besonders hohe Ströme anliegen, der Wirkungsgrad deutlich verbessert werden.

Der erweiterte Eingangsspannungsbereich macht das erfindungsgemäße Verfahren insbesondere für kleinere transformatorlose Wechselrichter der Leistungsklasse bis 2,5 kW oder max. 5 kW Spitzenleistung besonders geeignet, bei der sich bei relativ hohen Strömen verhältnismäßig geringe Eingangsspannungen ergeben. Während eine Verwendung zur einphasigen Einspeisung von Leistung in ein Netz vorgezogen wird, lässt sich das erfindungsgemäße Verfahren auch bspw. auf die Außenleiter eines Drehstromnetzes oder mittels drei zueinander versetzt taktender Wechselrichter und gesonderter Generatoren auf einen dreiphasigen Betrieb anwenden.

In einer vorteilhaften Ausführungsform sind die ersten Schaltelemente der Vollbrückenschaltung durch wenigstens ein Stromschutzelement vor unzulässig hohen Strömen in Rückwärtsrichtung geschützt. Hierzu kann jedem ersten Schaltelement ein ungesteuertes Stromschutzelement bspw. in Form einer Diode zugeordnet sein, die in Reihe zwischen dem ersten Schaltelement und einem Verbindungsknoten zu dem zweiten Schaltelement der jeweiligen Halbbrücke angeordnet ist, der einen Halbbrückenabgriff bildet. Alternativ kann den beiden ersten Schaltelementen eine gemeinsame Diode zugeordnet sein, die in einem Gleichspannungszweig zwischen einer Eingangsklemme für die Eingangsgleichspannung und einem Verbindungspunkt zwischen den beiden ersten Schaltelementen angeordnet ist. Dadurch lässt sich ein Halbleiterelement einsparen.

In einer bevorzugten Ausführungsform ist der wenigstens eine Spannungswandlerpfad parallel zu der Reihenschaltung aus dem Stromschutzelement und dem zugehörigen ersten Schaltelement angeschlossen, bspw. indem er zwischen der Eingangsklemme und dem Verbindungsknoten zwischen dem ersten und dem zweiten Schaltelement der jeweiligen Halbbrücke angeschlossen ist. Vorzugsweise sind zwei gesonderte Spannungswandlerpfade vorgesehen, die jeweils zwischen dem Ausgang der Spannungswandlereinrichtung und einem Brückenabgriff einer Halbbrücke ein eigenes ansteuerbares Schaltmittel aufweisen. Somit können Nebenschlusspfade für die beiden ersten Schaltelemente der Vollbrücke geschaffen werden, die in den jeweiligen Halbwellen der Netzwechselspannung hochfrequent schaltbar sind.

Die Erzeugung eines betragsmäßig höheren Potenzials wird vorzugsweise durch dynamische Regelung der Ausgangsspannung der Spannungswandlereinrichtung, insbesondere eines Hochsetzstellers bewerkstelligt. Ein induktiver DC/DC-Hochsetzsteller, wie er auch als Drossel-Aufwärtswandler oder Step-Up-Converter bezeichnet wird, wird bevorzugt. Es sind jedoch auch andere Hochsetzsteller, bspw. Gleichstromumrichter, möglich.

In einer bevorzugten Ausführungsform der Erfindung wird zur Feststellung, ob die Drossel in den Aufmagnetisierungsphasen ausreichend aufmagnetisiert wird, der aktuelle Drosselspulenstrom erfasst und eine zur Aufmagnetisierung der Speicherdrossel erforderlicher Sollspannung festgelegt. Ferner wird diese gewünschte mittlere Spannung am Eingang der Speicherdrossel mit einem Referenzwert verglichen, der die Wahl des geeigneten Betriebsmodus und der geeigneten Ansteuerungsstrategie ermöglicht. Insbesondere ist der Referenzwert passend gewählt, um eine Entscheidung zu ermöglichen, ob die Eingangsgleichspannung eventuell unter Berücksichtigung geeigneter Sicherheitsreserven zur Erzielung der gewünschten mittleren Brückenausgangs- bzw. Drosseleingangsspannung ausreicht.

In einer vorteilhaften Ausführungsform ist der Referenzwert ein variabler, in Abhängigkeit von momentanen Betriebsbedingungen anpassbarer oder einstellbarer Wert. Vorzugsweise ist der Referenzwert durch den Betrag des aktuellen Gleichspannungswertes gebildet oder gekennzeichnet, wobei bspw. Spannungsabfälle in dem Aufmagnetisierungspfad und bestimmte Toleranzen berücksichtigt werden. Wenn die gewünschte mittlere Drosseleingangsspannung betragsmäßig unterhalb des Gleichspannungspotenzials liegt, erfolgt die Aufmagnetisierung der Speicherdrossel gemäß dem normalen Betriebsmodus aus dem Gleichspannungskreis, während der Freilauf vorzugsweise über einen Freilaufpfad erfolgt, der eine Kommutierung des Freilaufstroms auf den gegenüberliegenden Gleichspannungszweig verhindert. Wenn der Betrag des gewünschten mittleren Drosseleingangsspannungswertes oberhalb der Gleichspannung liegt, wird der erfindungsgemäße erweiterte Betriebsmodus mit Aufmagnetisierung aus dem Spannungswandlerzweig und Freilauf aus dem Gleichspannungskreis über einen Gleichspannungszweig festgesetzt.

Im Bereich des Nulldurchgangs der Wechselspannung ist vorzugsweise ein weiterer Betriebsmodus vorgesehen, der es ermöglicht, auf Rippelströme zurückzuführende alternierende Stromflussrichtungen im Bereich des Nulldurchgangs zu beherrschen. In diesem Bereich wird auf eine herkömmliche asymmetrische Taktung der Vollbrücke ausgewichen, wobei jedoch die Schaltmittel in den Spannungswandlerpfaden verwendet werden. Somit werden ein erstes Schaltmittel und ein zweites Schaltelement einer Halbbrücke bzw. das andere Schaltmittel und das andere zweite Schaltelement der anderen Halbbrücke jeweils paarweise gleichzeitig geschlossen und geöffnet, wobei sie unter Berücksichtigung einer kurzen Totzeit, während der aller Schaltereinheiten offen sind, einander abwechseln. Durch geeignete Wahl des Tastverhältnisses kann sichergestellt werden, dass vor dem Nulldurchgang der Netzspannung eine Brückenspannung mit entgegengesetztem Vorzeichen bereitgestellt werden kann. Durch Vorhalten einer "negativen" Drosseleingangsspannung kann ein Einhalten der Sinusform des Strom beim Nulldurchgang sichergestellt werden.

Eine vorteilhafte Weiterbildung des erfindungsgemäßen Verfahrens umfasst ferner die Schritte der Anordnung eines Überbrückungspfades parallel zu der Spannungswandlereinrichtung und einer simultanen hochfrequenten Taktung des jeweiligen ersten Schaltelementes einer der Halbbrücken gemeinsam mit dem wenigstens einen Schaltmittel in dem zugehörigen Nebenschluss-Spannungswandlerpfad für den Fall, dass die Eingangsgleichspannung größer ist als der Scheitelwert der Wechselspannung. Dadurch können geringere Durchlastverluste in dem jeweiligen Betriebspunkt erzielt werden.

Gemäß einem weiteren Aspekt der vorliegenden Erfindung ist ein Wechselrichter zur Umwandlung einer Gleichspannung in eine Wechselspannung, insbesondere eine Netzwechselspannung mit einer Frequenz von 50 oder 60 Hz, geschaffen, wobei der Wechselrichter zur Ausführung des erfindungsgemäßen Verfahrens eingerichtet ist. Der Wechselrichter weist einen ersten und einen zweiten Gleichspannungszweig, an die eine Gleichspannungsquelle anschließbar ist, die eine Eingangsgleichspannung liefert, eine Vollbrückenschaltung, die zwei zueinander parallele Halbbrücken mit jeweils einer Reihenanordnung aus einem ersten Schaltelement, das an dem ersten Gleichspannungszweig angeschlossen ist, und einem zweiten Schaltelement, das an dem zweiten Gleichspannungszweig angeschlossen ist, aufweist, und zwei Wechselspannungszweige auf, die jeweils mit einer der Halbbrücken zwischen dem ersten und dem zweiten Schaltelement über einen Verbindungsknoten verbunden sind und zwei Wechselspannungsanschlüsse definieren. Der Wechselrichter weist ferner eine an die Gleichspannungszweige angeschlossene Spannungswandlerschaltung mit einer Spannungswandlereinrichtung zur Hochsetzung der Eingangsgleichspannung auf ein betragsmäßig höheres Ausgangspotenzial und wenigstens einem ansteuerbaren Schaltmittel auf, das angeordnet und eingerichtet ist, um einen Ausgang der Spannungswandlereinrichtung unmittelbar mit einem der Wechselspannungszweige zu verbinden.

Der so ausgebildete Wechselrichter gemäß der Erfindung ermöglicht somit, durch geeignete Taktung des wenigstens einen Schaltmittels der Spannungswandlerschaltung das höhere

Ausgangspotenzial der Spannungswandlereinrichtung unmittelbar an dem Abgriffpunkt einer Halbbrücke der Vollbrückenschaltung anzulegen, so dass der Aufmagnetisierungsstrom unter Umgehung des ansonsten hochfrequent zu taktenden ersten Schaltelementes direkt diesem Brückenabgriffpunkt und somit der Speicherdrossel zugeführt wird. Der Wechselrichter weist folglich die im Zusammenhang mit dem erfindungsgemäßen Verfahren bereits vorstehend erwähnten Vorteile auf. Ebenso wird auf die vorstehend beschriebenen Modifikationen und Weiterbildungen des erfindungsgemäßen Verfahrens verwiesen, die entsprechend auch auf den erfindungsgemäßen Wechselrichter anwendbar sind.

Bspw. weist der erfindungsgemäße Wechselrichter eine Erfassungseinrichtung zur Erfassung von Betriebsbedingungen, wie den bereits erwähnten Strömen und Spannungen, und zur Bereitstellung hierfür kennzeichnende Signale sowie eine Steuerungseinrichtung zur Auswertung der erfassten Signale und zur Ansteuerung der Schaltelemente und des wenigstens einen Schaltmittels mit einem bestimmten Schaltmuster auf. Die Steuerungseinrichtung kann insbesondere untere Verwendung eines Mikrocontrollers realisiert sein. Die Steuerungseinrichtung weist eine Logik auf, die anhand der erfassten Signale Phasen bestimmt, in denen die eingangsseitige Gleichspannung zur Erzeugung der Netzwechselspannung ausreicht bzw. nicht ausreicht, und steuert die entsprechenden Schaltereinheiten gemäß dem normalen bzw. dem erweiterten Betriebsmodus an. Die Steuerungseinrichtung weist ferner eine Logik auf, die im Bereich der Nulldurchgänge der Wechselspannung die asymmetrische Taktung der Schaltmittel und Schaltelemente bewirkt.

Weitere Einzelheiten vorteilhafter Ausführungsformen der Erfindung sind Gegenstand der Zeichnung, der Beschreibung oder Patentansprüche.

In der Zeichnung sind Ausführungsformen der Erfindung veranschaulicht. Es zeigen:

Fig. 1 eine Schaltungsanordnung eines Wechselrichters mit einer Vollbrücke gemäß der Erfindung;

Fig. 2 ein Schaltbild eines beispielhaften Hochsetzsteller, der in der erfindungsgemäßen Schaltungsanordnung nach Fig. 1 verwendet werden kann;

Fig. 3a und 3b schematische Darstellungen der zeitlichen Verläufe der Brückenspannung, der Ströme und der Steuersignale bei der Schaltungsanordnung nach Fig. 1; und

Fig. 4 eine modifizierte Ausführungsform einer Schaltungsanordnung für einen erfindungsgemäßen Wechselrichter.

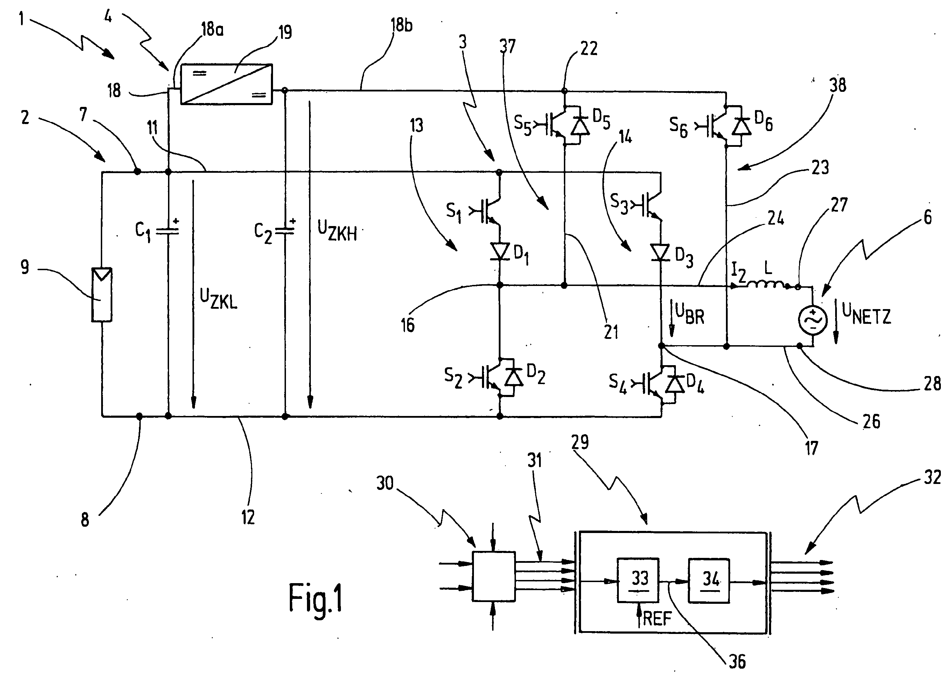

In Fig. 1 ist in leicht schematisierter Weise eine Schaltungsanordnung 1 eines erfindungsgemäßen Wechselrichters in einer einphasigen transformatorlosen Konfiguration veranschaulicht. Der dargestellte Wechselrichter 1 dient zur Erzeugung und Einspeisung eines Wechselstroms in ein externes Netz. Hierzu weist der Wechselrichter 1 einen Gleichspannungskreis 2, der auch als Zwischenkreis bezeichnet wird und die Eingangsgleichspannung vorgibt, eine als Vollbrücke ausgeführte transformatorlose Brückenschaltung 3, eine Spannungswandlerschaltung 4 zur betragsmäßigen Erhöhung des Potenzials der Eingangsgleichspannung und einen Wechselspannungskreis 6 auf. Der Gleichspannungskreis 2 weist zwei Gleichspannungsanschlüsse 7, 8 auf, an denen ein Gleichspannungsgenerator 9, bspw. ein Fotovoltaikgenerator, eine Brennstoffzelle, Batterie oder dgl., angeschlossen ist. Von den Gleichspannungsanschlüssen 7, 8 führen zwei Gleichspannungszweige 11, 12 weg, zwischen denen ein Speicherkondensator $C_1$ parallel zu dem Gleichspannungsgenerator 9 angeschlossen ist.

Parallel zu dem Kondensator $C_1$ ist die Vollbrückenschaltung 3 angeordnet, die zwei zueinander parallele Halbbrücken 13, 14 aufweist, die zwischen den Gleichspannungszweigen 11, 12 angeschlossen sind. Jede Halbbrücke 13, 14 weist zwei in Reihe miteinander verbundene Schaltelemente $S_1$, $S_2$ bzw. $S_3$, $S_4$ auf. Insbesondere weist die Halbbrücke 13 ein in Fig. 1 oberes erstes Schaltelement $S_1$ auf, dessen Eingang mit dem Gleichspannungszweig 11 verbunden ist, sowie ein in Fig. 1 unteres zweites Schaltelement $S_2$ auf, dessen Ausgang mit dem Gleichspannungszweig 12 verbunden ist. Mit dem Ausgang des ersten Schaltelementes $S_1$ der Halbbrücke 13 ist eine Anode einer Diode $D_1$ verbunden, deren Kathode mit dem Eingang des zweiten Schaltelementes $S_2$ verbunden ist. Außerdem ist parallel zu dem zweiten Schalter $S_2$ eine Freilaufdiode $D_2$ vorgesehen, die in entgegensetzte Durchlassrichtung zu dem zweiten Schaltelement $S_2$ angeordnet ist, um dieses gegen Ströme in Rückwärtsrichtung zu schützen. Zwischen der Diode $D_1$ und dem zweiten Schaltelement $S_2$, befindet sich ein Verbindungsknoten 16, der einen Mittelabgriff der in Fig. 1 linken Halbbrücke 13 bildet.

Analog ist ein in Fig. 1 oberes erstes Schaltelement $S_3$ der Halbbrücke 14 mit dem Gleichspannungszweig 11 verbunden, während ein zweites, in Fig. 1 unteres Schaltelement $S_4$ mit dem Gleichspannungszweig 12 verbunden ist. Die Durchlassrichtung der Schaltelemente $S_3$, $S_4$ entspricht derjenigen der Schaltelemente $S_1$, $S_2$ der Halbbrücke 13. Zwischen den Schaltelementen $S_3$ und $S_4$ ist in Reihe zu diesen und in gleicher Durchlassrichtung eine Diode $D_3$ vorgesehen, deren Kathode mit dem zweiten Schaltelement $S_4$ über einen Verbindungsknoten verbunden ist, der einen Mittelabgriff 17 der Halbbrücke 14 bildet. Die Dioden $D_1$ und $D_3$ können auch von der Gleichspannungsseite her betrachtet vor den ersten Schaltelementen $S_1$ bzw. $S_3$ angeordnet sein. Das zweite Schaltelement $S_4$ der Halbbrücke 14 weist ebenfalls eine antiparallele Freilaufdiode $D_4$ auf.

Die Schaltelemente $S_1$, $S_2$, $S_3$, $S_4$ sind vorzugsweise als Halbleiterschalter in Form von IGBT- (Insulated Gate Bipolar Transistor) oder MOS-Feldeffekttransistor-Schaltern oder anderen verlustarmen Schaltern ausgebildet, die mit hohen Frequenzen von bspw. 18 kHz, eventuell bis zu 100 kHz, geschaltet werden können. Dies gilt auch für weitere Schaltereinheiten der erfindungsgemäßen Schaltungsanordnung 1, bspw. Schaltmittel $S_5$ und $S_6$, die zu der Spannungswandlerschaltung 4 gehören. Entsprechend soll ein Eingang eines Schalters z.B. den Kollektor eines IGBTs oder den Drain-Anschluss eines MOS-Feldeffekttransistors bezeichnen, während ein Schalterausgang z.B. den Emitter eines IGBTs bzw. den Source-Anschluss eines MOS-Feldeffekttransistors bezeichnet.

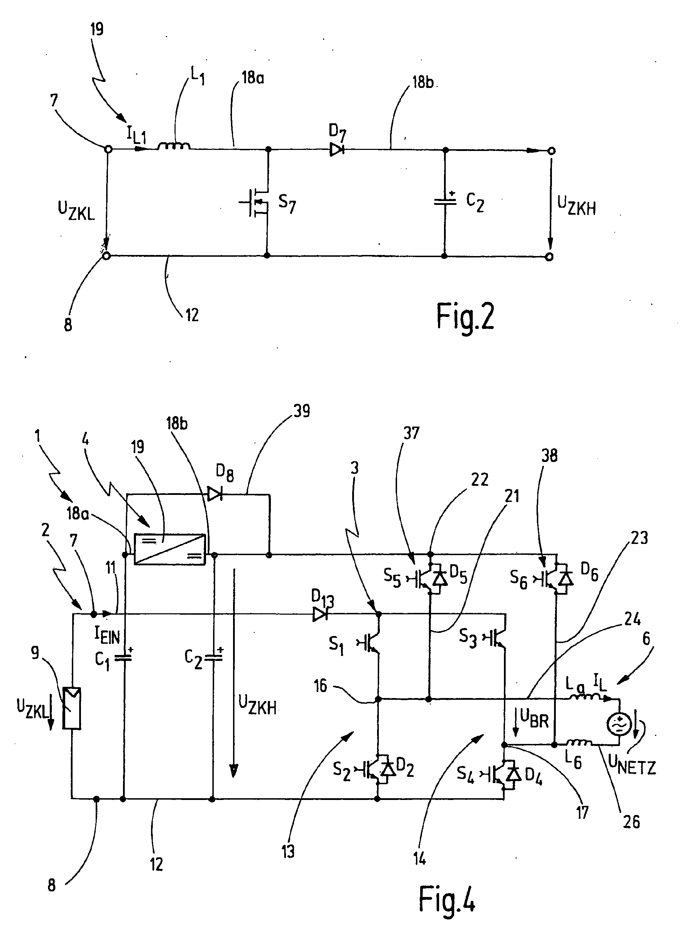

Die Spannungswandlerschaltung 4 ist zwischen den Gleichspannungsanschlüssen 7, 8 und den Mittelabgriffen 16, 17 der Halbbrücken 13, 14 angeordnet. Insbesondere weist die Spannungswandlerschaltung 4 einen mit dem Gleichspannungszweig 11 verbundenen Spannungswandlerzweig 18 auf, in dem eine hier vorteilhafterweise als DC/DC-Hochsetzsteller ausgebildete Spannungswandlereinrichtung 19 angeordnet ist. Die Funktion der Spannungswandlereinrichtung 19 besteht darin, das Potenzial der Eingangsspannung, hier der Zwischenkreisspannung $U_{ZKL}$, auf ein betragsmäßig höheres Zwischenkreispotenzial heraufzusetzen, das hier mit $U_{ZKH}$ bezeichnet ist. Eine beispielhafte Ausführungsform eines verwendbaren Hochsetzstellers oder Spannungswandlers und seine Funktionsweise sind nachstehend im Zusammenhang mit Fig. 2 erläutert.

Der Hochsetzsteller 19 ist mit seinem Eingang 18a an dem Gleichspannungszweig 11 angeschlossen, während sein Ausgang 18b mit den Schaltmitteln $S_5$ und $S_6$ verbunden ist, die wiederum jeweils an den Mittelabgriff 16 bzw. 17 angeschlossen sind. Genauer gesagt, ist das Schaltmittel $S_5$ in einem Spannungswandlerast 21 in Durchlassrichtung zwischen einem Verbindungspunkt 22 des Spannungswandlerzweiges 18 am Ausgang des Hochsetzstellers 19 und dem Mittelabgriff 16 der Halbbrücke 13 angeschlossen. Ein weiterer Spannungswandlerast 23, der das weitere Schaltmittel $S_6$ der Spannungswandlerschaltung 4 enthält, zweigt von dem Verbindungspunkt 22 ab und führt zu dem Mittelabgriff 17 der Halbbrücke 14. Die Schaltmittel $S_5$ und $S_6$ sind mit antiparallelen Freilaufdioden $D_5$ bzw. $D_6$ versehen.

Fig. 2 zeigt einen beispielhaften Hochsetzsteller 19, der in der erfindungsgemäßen Schaltungsanordnung 1 eingesetzt werden kann und hier in Form eines getakteten induktiven Spannungswandlers ausgeführt ist. Der Hochsetzsteller 19 weist eine in dem Spannungswandlerzweig 18 zwischen einem eingangsseitigen Zweig 18a und einem ausgangsseitigen Zweig 18b an-

geordnete Spule oder Drossel $L_1$ auf, die zur Energiespeicherung vorgesehen ist und über einen schließbaren Schalter $S_7$ geladen wird. Hierzu ist der Schalter $S_7$ in Stromrichtung hinter der Spule L zwischen dem Spannungswandlerzweig 18 und dem unteren, zweiten Gleichspannungszweig 12 angeordnet. In Reihe mit der Spule L ist eine Freilaufdiode $D_7$ geschaltet, hinter der zur Aufsummierung der Ausgangsspannung ein Pufferkondensator $C_2$ angeordnet ist, der zwischen dem Spannungswandlerzweig 18 und dem unteren Gleichspannungszweig 12 angeschlossen ist. Somit liegt die Reihenschaltung aus der Freilaufdiode $D_7$ und dem Pufferkondensator $C_2$ parallel zu dem Schalter $S_7$.

Im Schließzustand des steuerbaren Schalters $S_7$ wird die Spule $L_1$ durch diesen gegen das Potenzial des unteren Gleichspannungszweigs geschaltet. An der Spule fällt somit die Eingangsspannung $U_{ZKL}$ ab, wobei der Strom durch die Spule $L_1$ und gemeinsam mit diesem die gespeicherte Energie des Magnetfeldes ansteigen. Wird der Schalter $S_7$ geöffnet, steigt die Spannung am sekundären Ende der Spule $L_1$ sehr schnell an, bis sie die an dem Kondensator $C_2$ anliegende Spannung $U_{ZKH}$ übersteigt und die Diode öffnet. Der Strom fließt im ersten Moment unverändert weiter und lädt den Kondensator $C_2$ weiter auf. Das Magnetfeld der Spule $L_1$ baut sich dabei ab und gibt seine Energie ab, indem es den Strom über die Diode $D_5$ in den Pufferkondensator $C_2$ und ggf. weiter zur Last treibt.

Erneut bezugnehmend auf Fig. 1 ist veranschaulicht, dass an dem Mittelabgriff 16 der Halbbrücke 13 und an dem Mittelabgriff 17 der Halbbrücke 14 Verbindungsleitungen 24, 26 angeschlossen sind, die einen ersten bzw. zweiten Wechselspannungszweig 24 bzw. 26 des Wechselspannungskreises 6 bilden. Die Verbindungsleitung 24 ist mit einem ersten Wechselspannungsanschluss 27 verbunden, während die Verbindungsleitung 26 zu einem weiteren Wechselspannungsanschluss 28 führt. An die Wechselspannungsanschlüsse 27, 28 ist eine externe Wechselspannung $U_{NETZ}$, bspw. die Netzspannung eines öffentlichen Versorgungsnetzes, angeschlossen. Ferner ist in der Verbindungsleitung 24 wenigstens eine Speicherdrossel L vorgesehen, die dazu dient, von der Vollbrücke 3 gelieferte Energie zwischenzuspeichern und an das Wechselspannungsnetz abzugeben. Außerdem enthält der Wechselspannungskreis 6 im Allgemeinen einen hier nicht näher veranschaulichten Glättungskondensator, der von der Gleichspannungsseite her betrachtet hinter der Spule L zwischen den Wechselspannungszweigen 24, 26 eingefügt ist, um hochfrequente Spannungsanteile der zwischen den Mittelabgriffen 16 und 17 anfallenden Brückenspannung $U_{BR}$ herauszufiltern.

Wie aus Fig. 1 ferner hervorgeht, ist zur Überwachung und Steuerung der Betriebsweise der Schaltungsanordnung 1 eine Steuerungseinrichtung 29 vorgesehen. Die Steuerungseinrichtung 29 empfängt an ihrem Eingang Eingangssignale 31, die von diversen Sensormitteln, wie Strom- und Spannungsfühlern, herrühren, die in Fig. 1 nicht im Einzelnen, sondern schematisiert in Form eines Blocks 30 veranschaulicht sind, der die gesamte Sensor- bzw. Erfassungseinrichtung kennzeichnet. Es werden insbesondere Eingangssignale, die die Eingangs- bzw. Zwischenkreisspannung $U_{ZKL}$, die erhöhte Zwischenkreisspannung $U_{ZKH}$ am Ausgang des Hochsetzstellers 19, die Netzspannung $U_{NETZ}$, den gesamten Eingangsstrom der Schaltungsanordnung $I_{EIN}$, den durch die Drossel $L_1$ des Hochsetzstellers 19 fließenden Strom $I_{L_1}$ und den durch die Speicherdrossel L fließenden Drosselstrom $I_L$ sowie ggf. weitere oder andere äquivalente Zustandsgrößen in der Schaltungsanordnung 1 kennzeichnen, erfasst und berücksichtigt. Die Steuerungseinrichtung 29 nimmt die erfassten Eingangssignale 31 entgegen und verarbeitet diese gemäß vorbestimmten logischen Regeln, um an ihrem Ausgang Ausgangssignale 32 zur Ansteuerung der Schaltereinheiten $S_1$ bis $S_6$ und vorzugsweise auch des Schalter $S_7$ der Spannungswandlerschaltung 4 auszugeben. Die Eingangssignale 31 können der Steuerungseinrichtung 29 in analoger oder digitaler Form zugeführt werden, so dass die Steuerungseinrichtung 29 analoge und/oder digitale Logikelemente enthalten oder vorzugsweise in Form eines auf einen Mikroprozessor ablaufenden Steuerungsprogramms realisiert sein kann, in dem die logischen Regeln implementiert sind.

Unabhängig von ihrer Realisierung enthält die Steuerungseinrichtung 29 eine Auswerteeinrichtung oder -logik 33, die dazu eingerichtet ist, wenigstens eine der Zustandsgrößen, wie sie durch einen der Eingangssignale 31 gekennzeichnet sind, auszuwerten, daraus weitere Größen zu bestimmen und mit einem Referenzwert REF zu vergleichen, und eine Ansteuerungseinrichtung oder -logik 34, die mit der Auswerteeinrichtung 33 verbunden ist und von dieser angewiesen wird, eine geeignete Ansteuerungsstrategie zu wählen, um die Schaltereinheiten $S_1$ bis $S_6$ und eventuell $S_7$ über die Ausgangssignale 32 auf geeignete Weise anzusteuern.

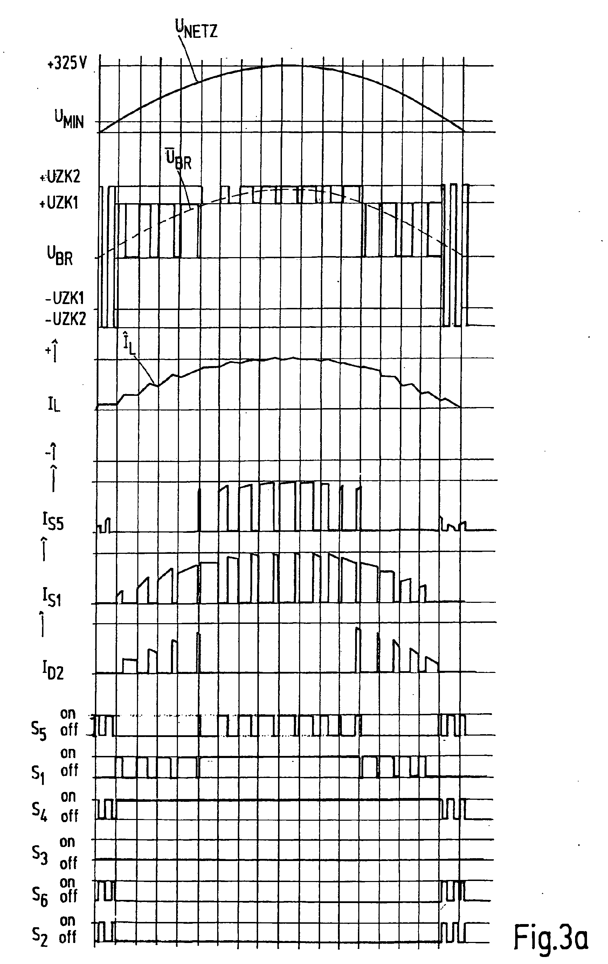

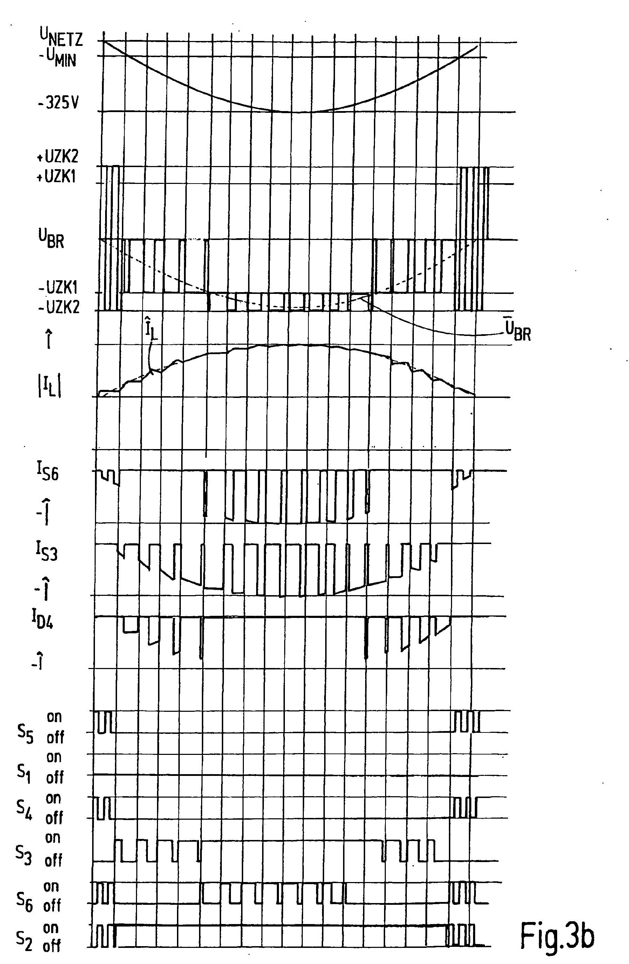

In Fig. 3a sind zur Veranschaulichung der Funktionsweise der erfindungsgemäßen Schaltungsanordnung 1 vereinfachte Zeitdiagramme mit Zeitverläufen verschiedener Teilspannungen und Ströme sowie Steuerungssignale in der Schaltungsanordnung 1 für den Fall einer positiven Halbwelle der Netzspannung $U_{NETZ}$ veranschaulicht. Entsprechende Diagramme für den Fall der negativen Halbwelle der Netzspannung $U_{NETZ}$ sind in Fig. 3b dargestellt. Es ist zu beachten, dass für die hochfrequent getakteten Schaltereinheiten $S_1$, $S_3$, $S_5$ und $S_6$ die Schaltfrequenz im Betrieb mehrere, bspw. 16 oder 18 kHz beträgt, während in der Zeichnung aus Komplexitätsgründen lediglich wenige Taktungen pro Halbwelle dargestellt sind, um anhand eines Beispiels die prinzipielle Funktionsweise der Schaltungsanordnung 1 zu verdeutlichen. Die Schaltungsanordnung 1 funktioniert wie folgt:

Die Schaltungsanordnung 1 wird vorzugsweise dazu verwendet, Energie in ein Netz, insbesondere ein öffentliches Versorgungsnetz, einzuspeisen. Dabei soll unter der Annahme, dass an den Wechselspannungsanschlüssen 27, 28 eine sinusförmige Netzspannung $U_{NETZ}$ mit einer Scheitelspannung von $\sqrt{2} \cdot 230$ V und einer Frequenz von 50 oder 60 Hz anliegt, wie sie in den obersten Diagrammdarstellungen der Fig. 3a und Fig. 3b für die jeweilige Halbwelle veranschaulicht ist, aus den Zwischenkreisspannungen $U_{ZKL}$ des Gleichspannungsgenerators 9 am Ausgang des Wechselrichters 1 ein Wechselstrom erzeugt werden, der zu der Phasenlage und Amplitude der Wechselspannung $U_{NETZ}$ passt. Hierzu steuert die Steuerungseinrichtung 29 nach einem bestimmten Taktmuster die Schaltereinheiten $S_1$ bis $S_6$ geeignet an, um diese zu schließen und zu öffnen. Dabei werden die ersten Schaltelemente $S_1$ und $S_3$ der Vollbrückenschaltung 3 sowie die Schaltmittel $S_5$, $S_6$ der Spannungswandlerschaltung 4 durch geeignete Modulation, bspw. Pulsweitenmodulation der Ansteuersignale 32 hochfrequent betätigt, während die zweiten Schaltelemente $S_2$ und $S_4$ der Vollbrückenschaltung synchron zur Netzfrequenz geschlossen und geöffnet werden.

Wie aus Fig. 3a hervorgeht, wird im Falle einer positiven Halbwelle und eines geringen Spannungspegels der Netzspannung $U_{NETZ}$, der jedoch betragsmäßig höher ist als ein minimaler Spannungspegel $U_{MIN}$, gemäß einem normalen Betriebsmodus mit symmetrischer Taktung der Schalter $S_1$ hochfrequent geschaltet, während der Schalter $S_4$ während nahezu der gesamten positiven Halbwelle geschlossen bleibt. Die übrigen Schaltereinheiten $S_2$, $S_3$, $S_5$ und $S_6$ sind geöffnet. Bei jeder Schließung des Schaltelementes $S_1$, im Folgenden mit Aufmagnetisierungsphase bezeichnet, fließt ein Aufmagnetisierungsstrom $I_{S1}$ aus dem ersten Zwischenkreis oder Gleichspannungskreis 2, insbesondere dem Speicherkondensator $C_1$, über den Gleichspannungszweig 11, das Schaltelement $S_1$ und die Diode $D_1$ zu der Speicherdrossel L, um diese magnetisch bzw. energetisch aufzuladen, und ferner über das geschlossene Schaltelement $S_4$ zu dem unteren Gleichspannungszweig 12 zurück. Die Brückenspannung $U_{BR}$ entspricht unter Vernachlässigung von Spannungsabfällen der Zwischenkreisspannung $U_{ZK1}$. Der Drosselstrom $I_L$ nimmt in jeder Ladephase stetig zu. Mit steigender Netzspannung $U_{NETZ}$ wird die Schließdauer des Schalters $S_1$ größer. Wenn das Schaltelement $S_1$ bei jeder Taktung geöffnet wird, was als Freilaufphase bezeichnet wird, sinkt die Brückenspannung $U_{BR}$ im Wesentlichen auf den Wert null, so dass es zu einer Abmagnetisierung der Drosselspule L und einem Abfall des Drosselstroms $I_L$ in jeder Freilaufphase kommt. Dabei fließt der Freilaufstrom von der Verbindungsleitung 26 durch den Schalter $S_4$ und die Freilaufdiode $D_2$ des Schalters $S_2$ zu der Verbindungsleitung 24 mit der Speicherdrossel L. Wie aus Fig. 3a zu erkennen, steigt der Spulenstrom $I_L$ unter Ausbildung geringer Welligkeiten, die als Stromrippel bezeichnet werden, allmählich an und folgt dabei im Mittel dem Verlauf der Netzspannung $U_{NETZ}$.

Sobald die Zwischenkreisspannung $U_{ZKL}$ für eine hinreichende Aufladung der Drosselspule L nicht ausreicht, wird ein erweiterter Betriebsmodus eingeleitet. Dieser Fall wird von der Auswerteeinrichtung 33 erkannt, indem sie von dem/den empfangenen Eingangssignal(en) 31 eine aktuell gewünschte mittlere Spannung $\overline{U}_{BR}$ am Drosseleingang 26, die eine ausreichende Aufmagnetisierung der Speicherdrossel L ermöglicht, bestimmt und diese mit einem Referenzwert REF vergleicht. Genauer gesagt und in einer bevorzugten Ausführungsform enthält die Ansteuerungseinrichtung 33 eine hier nicht näher dargestellte Stromreglerlogik, die die Amplitude der mittleren Stromstärke $\hat{I}_L$ des durch die Drosselspule fließenden Stroms $I_L$ entsprechend einem Sollwert regelt. In Abhängigkeit von den Soll- und Istwerten des Drosselstroms $I_L$ bestimmt die Ansteuerungseinrichtung die jeweils erforderliche mittlere Drosseleingangsspannung $\overline{U}_{BR}$ und vergleicht diese mit dem Referenzwert REF. Wenngleich es möglich ist, den Referenzwert bspw. in Abhängigkeit von einem bekannten Wert von $U_{ZKL}$ im Voraus festzulegen, wird in der bevorzugten Ausführungsform der Erfindung der Referenzwert mit Hilfe des momentan erfassten Wertes von $U_{ZKL}$ bestimmt, wobei Spannungsabfälle im Aufmagnetisierungspfad entsprechend berücksichtigt werden. Wenn der Wert $\overline{U}_{BR}$ betragsmäßig größer ist als der Referenzwert REF, liefert die Ansteuerungseinrichtung 33 an die Ansteuerungslogik 34 ein Signal 36 zum Einleiten des erweiterten Betriebsmodus.

In dem erweiterten Betriebsmodus veranlasst die Ansteuerungseinrichtung 34, dass das erste Schaltelement $S_1$ geschlossen bleibt, während nun das Schaltmittel $S_5$ der Spannungswandlerschaltung 4 hochfrequent geschaltet wird. Das zweite Schaltelement $S_4$ in der Halbbrücke 14 bleibt weiterhin geschlossen. In den nachfolgenden Aufmagnetisierungsphasen wird also die durch den Hochsetzsteller 19 erhöhte Zwischenkreisspannung $U_{ZKH}$ zur Aufmagnetisierung der Speicherdrossel L an den Mittelabgriff 16 der Halbbrücke 13 angelegt. Der Ladestrom $I_{S5}$ fließt im Schließzustand des Schalters $S_5$ von dem Ausgang a8b des Hochsetzstellers 19 über den Spannungswandlerast 21 mit dem Schaltmittel S5 zu dem Mittelabgriff 16 und ferner über die Verbindungsleitung 24 zu dem Eingang der Drossel L. Der Ladestrom $I_{S5}$ fließt jedoch nicht durch das zuvor hochfrequent getaktete Schaltelement $S_1$ der Vollbrücke 3 hindurch, da der Spannungswandlerzweig 18a, 18b und der Spannungswandlerast 21 im Nebenschluss zu dem Schaltelement $S_1$ angeordnet sind. Im Öffnungszustand

des Schalters $S_5$ fließt ein Freilaufstrom $I_{S1}$ von dem Speicherkondensator $C_1$ über den nun als Freilaufpfad dienenden Gleichspannungszweig 11, das erste Schaltelement $S_1$ und die Diode $D_1$ zu der Spule L.

Vorteilhafterweise schwankt die Brückenspannung $U_{BR}$ lediglich zwischen dem Wert der erhöhten Zwischenkreisspannung $U_{ZKH}$ in der Aufmagnetisierungsphase und in etwa dem niedrigeren Wert der Eingangsspannung $U_{ZKL}$, der das Freilaufpotenzial in der Freilaufphase definiert. Die Spannungssprünge der Brückenspannung $U_{BR}$ sind verhältnismäßig gering, jedenfalls deutlich geringer als in dem Fall, wenn der Freilauf von dem gegenüberliegenden Gleichspannungszweig 12 erfolgen würde. Dadurch wird die elektromagnetische Verträglichkeit verbessert, so dass externe Filter zur elektromagnetischen Entstörung, wie Drosseln, Kondensatoren oder dgl., kleiner und kostengünstiger ausgelegt oder sogar weggelassen werden können. Außerdem wird durch die geringen Spannungssprünge der Brückenspannung $U_{BR}$ auch die Abmagnetisierung der Speicherdrossel L wesentlich verlangsamt. Dies hat wiederum äußerst geringe Rippelströme und Ummagnetisierungsverluste innerhalb der Speicherdrossel L zur Folge. Ferner fallen in dem Schaltmittel $S_5$ und der Diode $D_1$, die die Spannungssprünge mit ausführen, nur sehr geringe Schaltverluste an.

Die Durchlassverluste sind ebenfalls reduziert, weil sowohl in dem normalen als auch in dem erweiterten Betriebsmodus stets nur zwei Schaltereinheiten Strom führen. Auch in dem erweiterten Betriebsmodus fließt der Ladestrom nur über zwei Halbleiterstrecken, nämlich das Schaltmittel $S_5$ der Spannungswandlerschaltung 4 und das zweite Schaltelement $S_4$ der Halbbrücke 14. Es kann also gegenüber vorbekannten Schaltungsanordnungen und Schaltschemen, die einen Hochsetzsteller nur bei Bedarf, also nur wenn die Eingangsspannung nicht ausreicht, am Eingang einer Vollbrücke verwenden, eine Halbleiterstrecke eingespart werden. Dies, weil der schaltbare Spannungswandlerpfad 37, der den Spannungswandlerzweig 18 und den Spannungswandlerast 21 mit dem Schaltmittel $S_5$ enthält, parallel zu der Reihenschaltung aus dem Schaltelement $S_1$ und der Diode $D_1$ angeordnet ist. Die Reduktion der Durchlassverluste ist umso größer, als in dieser Phase des Schaltschemas verhältnismäßig große Ströme fließen. Insgesamt kann also ein sehr hoher Wirkungsgrad erzielt werden.

Außerdem wird vorteilhafterweise sogar in der Freilaufphase Energie der Speicherdrossel L und nachgelagert dem Netz zugeführt. Somit kann, wie aus Fig. 3a ersichtlich, die Dauer, während der der Schalter $S_5$ im oberen Bereich der Sinuswelle jeweils leitend geschaltet wird, deutlich verringert werden. Damit gelangt über den Schalter $S_5$ eine geringere Energiemenge ins Netz. Der Schalter $S_5$ und der Hochsetzsteller 19 können wesentlich kleiner ausgelegt und ausgeführt sein.

Wenn die Netzspannung $U_{NETZ}$ nach dem Scheitelpunkt wieder absinkt und das Referenz-Spannungsniveau REF unterschreitet, schaltet die Ansteuerungslogik 34 infolge eines weiteren Signals 36 der Auswerteeinrichtung 33 wieder in den vorstehend erwähnten normalen Betriebsmodus um, in dem sie das Schaltmittel $S_5$ der Spannungswandlerschaltung 4 öffnet und das erste Schaltelement $S_1$ der Vollbrücke 3 hochfrequent taktet. Die Aufmagnetisierung erfolgt erneut über das Schaltelement $S_1$ und die Diode $D_1$ ausgehend von dem Potenzial $U_{ZKL}$, während der Freilauf über die Freilaufdiode $D_2$ erfolgt.

In der negativen Halbwelle der Netzspannung $U_{NETZ}$, wenn diese kleiner ist als ein Spannungswert $-U_{MIN}$, bleiben die Schaltereinheiten $S_1$, $S_4$ und $S_5$ geöffnet, während in analoger Weise die Schaltereinheiten $S_2$, $S_3$ und $S_6$ angesteuert werden, vgl. Fig. 3b. Dabei wird im normalen Betriebsmodus, wenn die gewünschte mittlere Spannung $\overline{U}_{BR}$ in dem in Fig. 1 eingezeichneten Sinne größer ist als die negative Zwischenkreisspannung $-U_{ZKL}$ bei geschlossenem zweiten Schaltelement $S_2$ der Halbbrücke 13 und geöffnetem Schaltmittel $S_6$ der Spannungswandlerschaltung 4 das erste Schaltelement $S_3$ der Halbbrücke 14 hochfrequent geschaltet. In den Aufmagnetisierungsphasen ist der Betrag der Brückenspannung $U_{BR}$ durch das Zwischenkreispotenzial $U_{ZKL}$ vorgegeben, und es fließt ein Aufmagnetisierungsstrom für die Speicherdrossel L über das Schaltelement $S_3$ und die Diode $D_3$ ins Netz sowie aus dem Netz durch die Speicherdrossel L und über das Schaltelement $S_2$ zu dem Gleichspannungszweig 12. In Freilaufphasen, wenn das Schaltelement $S_3$ geöffnet ist, führt der Freilaufpfad mit dem geschlossenen Schaltelement $S_2$ und der Freilaufdiode $D_4$ des Schaltelementes $S_4$ den Freilaufstrom. Die Brückenspannung $U_{BR}$ springt betragsmäßig zwischen $U_{ZKL}$ und null.

In dem Zeitabschnitt, in dem der Istwert der Wechselspannung $U_{NETZ}$ das Potenzial $-U_{ZKL}$ unterschreitet oder, genauer gesagt, der Betrag der momentan gewünschten mittleren Spannung $\overline{U}_{BR}$ am Eingang der Speicherdrossel L größer ist als der Referenz-Spannungswert, z.B. der Betrag der Gleichspannung $U_{ZKL}$ zuzüglich Reserve, schaltet die Steuerungseinrichtung 29 in den erweiterten oder modifizierten Betriebsmodus um, in dem das an dem Gleichspannungspotenzial $U_{ZKL}$ durch den Hochsetzsteller 19 auf ein betragsmäßig höheres Potenzial $U_{ZKH}$ gewandelt wird, das nunmehr das Aufmagnetisierungspotenzial in den Aufmagnetisierungsphasen vorgibt. Das Schaltmittel $S_6$ wird nun hochfrequent geschaltet, während das Schaltelement $S_3$ geschlossen bleibt. Ströme zur Aufmagnetisierung der Drosselspule L fließen nun über das Schaltmittel $S_6$, während der Freilauf über das Schaltelement $S_3$ und die Diode $D_3$ in dem nun als Freilaufpfad dienenden Ast der Halbbrücke 14 erfolgt. Die Brückenspannung $U_{BR}$ schwankt betragsmäßig zwischen dem erhöhten Zwischenkreispotenzial $U_{ZKH}$ und dem Zwischenkreispotenzial $U_{ZKL}$. Der Spannungshub ist gering, was geringe Schaltverluste und Ummagnetisierungsverluste ergibt. Außerdem wird der Ladestrom für die Drosselspule L unter Umgehung des im normalen Betriebsmodus hochfrequent getakteten Schaltelementes $S_3$ über den parallel zu dem Schaltelement $S_3$ und der Diode $D_3$ angeordneten Spannungswandlerpfad 38, der den Spannungswandlerzweig 18a, 18b und den Spannungswandlerast 23 mit dem Schaltmittel $S_6$ enthält, direkt dem Brückenabgriff 17 bzw. der Verbindungsleitung 26 zugeführt. Wie bei der positiven Halbwelle der Netzwechselspannung wird auch hier eine Halbleiterstrecke eingespart. Die Durchleitverluste sind reduziert, und der Wirkungsgrad ist verbessert.

Im Bereich des Nulldurchgangs der Netzwechselspannung $U_{NETZ}$ kann es infolge der Stromrippel des Drosselspulenstroms $I_L$ zu einer Richtungsumkehr des Drosselspulenstroms $I_L$ kommen. Um diese alternierenden Stromflussrichtungen zu beherrschen, wird in diesem Bereich auf eine symmetrische Taktung umgestellt, in der abwechselnd zwischen einem Schaltzustand, in dem die Schaltereinheiten $S_5$ und $S_4$ synchron geschlossen sind, und einem Schaltzustand, in dem die Schaltereinheiten $S_6$ und $S_2$ synchron geschlossen sind, hin- und hergeschaltet wird. Dazwischen ist eine kurze Totzeitverriegelung, also ein Zustand vorgesehen, in dem alle Schalter $S_5$, $S_4$, $S_6$ und $S_2$ sperren, um zu vermeiden, dass alle Schaltereinheiten gleichzeitig leiten und heiße Zweige geschaltet werden. Je nach bestimmtem Taktverhältnis ist es möglich, die Netzdrossel L stets mit positivem bzw. negativen Zwischenkreispotenzial zu beaufschlagen, so dass sich das Magnetfeld der Netzdrosseln im Vorfeld des Nulldurchgangs weitestgehend abbaut und dadurch der Stromfluss $I_L$ zum Zeitpunkt des Nulldurchgangs einfach umgekehrt werden kann. Dabei werden speziell die Schaltmittel $S_5$ und $S_6$ aus dem hohen Zwischenkreis für diese Taktung verwendet, da auch in diesem Betriebszustand ein Freilauf für die Netzdrosseln vorhanden sein muss, der dann von den Freilaufdioden der Schaltereinheiten $S_2$, $S_4$, $S_5$ und $S_6$ bereitgestellt wird.

Im Rahmen der Erfindung sind zahlreiche Modifikationen möglich. Bspw. kann die Schaltungsanordnung 1 erweitert werden, um mehr als zwei in Reihe oder parallel miteinander verbundene Gleichspannungsgeneratoren zu verwenden. Eine Drosselspule L kann auch in jedem Wechselspannungszweig 24 und 26 vorgesehen sein. In wenigstens einem Wechselspannungszweig können Filterelemente zur Unterdrückung hochfrequenter Störsignale eingefügt werden, wobei derartige Elemente aus Einfachheitsgründen in Fig. 1 nicht veranschaulicht sind. Bei dem aufgezeigten Wechselrichter 1 könnten die Wechselspannungsanschlüsse 27, 28 auch zwei Außenleiteranschlüsse, bspw. L1 und L2, eines Drehstromnetzes bilden. Der Wechselrichter 1 kann sogar zu einer dreiphasigen Konfiguration erweitert werden, wenn aus drei Gleichspannungen ein dreiphasiger Wechselstrom erzeugt werden soll. Die Schaltungsanordnung 1 ist jedoch insbesondere für einen Wechselrichter für kleine Leistungen bis maximal 5 kW Spitzenleistung und einphasigen Betrieb geeignet, wobei er hier einen verbesserten Wirkungsgrad erzielt.

Ferner kann auch ein anderes geeignetes Kriterium zur Feststellung, ob die Eingangsspannung $U_{ZKL}$ zur Aufmagnetisierung der Speicherdrossel L ausreicht oder nicht, aufgestellt werden. Ein derartiges Kriterium kann bspw. auf einem Vergleich des Betrags des aktuellen Wertes der Netzwechselspannung $U_{NETZ}$ mit einem geeigneten Spannungsreferenzwert, bspw. einem von der Eingangsspannung abhängigen Referenzwert, basieren. Es ist auch zu beachten, dass Zustandsgrößen in der Schaltung anhand allgemeiner elektrotechnischer Beziehungen aus anderen Größen abgeleitet oder anstatt derer für das Kriterium verwendet werden können.

Als Spannungswandlereinrichtung 19 könnte auch ein sonstiger Gleichstromumrichter oder Hochsetzsteller, der nicht induktiv arbeitet, verwendet werden, solange dieser in der Lage ist, aus der Eingangsspannung $U_{ZKL}$ eine betragsmäßig höhere Ausgangsspannung $U_{ZKH}$ zu gewinnen. Der in Fig. 2 veranschaulichte Drossel-Aufwärtswandler wird jedoch aufgrund seines einfachen Aufbaus, einer guten Regelbarkeit und geringer Verluste bevorzugt. Insbesondere kann für den Schalter $S_7$ des Hochsetzstellers 19 ein MOS-Feldeffekttransistor verwendet werden, der sich durch besonders geringe Schaltverluste auszeichnet. Da der Schalter $S_7$ dauerhaft hochfrequent getaktet wird und in den Betriebspunkten der Energiebedarf des Hochsetzstellers 19 gering ist, sind die Durchlassverluste gering, während sich die geringen Schaltverluste hier besonders vorteilhaft auswirken. Außerdem ist es möglich, die Schaltfrequenz für den Hochsetzsteller 19 zu erhöhen, um die Spule $L_1$ des Hochsetzstellers 19 verkleinern und die Vorteile des MOS-Feldeffekttransistors besser ausnutzen zu können.

Eine weitere vorteilhafte Ausführungsform der Erfindung ist in Fig. 4 veranschaulicht. Soweit Übereinstimmung in Bau und/oder Funktion besteht, wird, um Wiederholungen zu vermeiden, unter Verwendung gleicher Bezugszeichen auf die vorstehende Beschreibung verwiesen.

Die in Fig. 4 veranschaulichte Schaltungsanordnung 1 unterscheidet sich von derjenigen nach Fig. 1 in erster Linie dadurch, dass anstelle der in Reihe zu den ersten Schaltelementen $S_1$ und $S_3$ der Vollbrücke 3 angeordneten Dioden $D_1$ und $D_3$ nach Fig. 1 nunmehr eine gemeinsame Schutzdiode $D_{13}$ in dem Gleichspannungszweig 11 in Durchlassrichtung zwischen dem Gleichspannungsanschluss 7 und dem Verbindungspunkt zwischen den ersten Schaltelementen $S_1$ und $S_3$ angeordnet ist. Ferner ist in jedem Wechselspannungszweig 24, 26 jeweils eine Speicherdrossel $L_a$ bzw. $L_b$ vorgesehen, wie dies bei derartigen Wechselrichterschaltungen üblich ist und auch in der Schaltungsanordnung nach Fig. 1 verwendet werden könnte. Die Diode $D_{13}$ hat die gleiche Funktion wie die Dioden $D_1$ bzw. $D_3$ in der Schaltungsanordnung 1 nach Fig. 1, nämlich die Schaltelemente $S_1$ und $S_3$ vor unzulässig hohen Rückwärtsströmen zu schützen und in den Freilaufphasen als Freilaufdiode zu dienen, wird jedoch sowohl in der positiven Halbwelle als auch in der negativen Halbwelle verwendet. Somit kann bei der Realisierung der Schaltungsanordnung 1 nach Fig. 4 ein Halbleiterbauteil eingespart werden, was die Kosten der Schaltungsanordnung 1 weiter reduziert. Vorteilhafterweise sind auch hier der durch den Spannungswandlerzweig 18a, 18b, den Hochsetzsteller 19 und den Spannungswandlerast 21 mit dem Schaltmittel S5 gebildete erste schaltbare Spannungswandlerpfad 37 wie auch der durch den Spannungswandlerzweig 18a, 18b, den Hochsetzsteller 19 und den Spannungswandlerast 23 mit dem Schaltmittel $S_6$ gebildete zweite schaltbare Spannungswandlerpfad 38 jeweils parallel bzw. im Nebenschluss zu der Reihenanordnung aus dem Stromschutzelement $D_{13}$ und dem normalerweise hochfrequent getakteten ersten Schaltelement $S_1$ bzw. $S_3$ angeordnet. Dadurch kann im erweiterten Betriebsmodus wiederum der Ladestrom unter Umgehung des Schaltelementes $S_1$ bzw. $S_3$ unmittelbar dem Mittelabgriff 16 bzw. 17 der jeweiligen Halbbrücke 13 bzw. 14 für die Drosselspule $L_a$ bzw. $L_b$ zugeführt werden kann. Im Übrigen sind die Vorteile und Funktionsweise die gleichen, wie sie bereits im Zusammenhang mit der Ausführungsform nach Fig. 1 erläutert worden sind.

Fig. 4 zeigt eine weitere vorteilhafte optionale Modifikation. Parallel zu dem Hochsetzsteller 19 ist ein Überbrückungspfad 39 vorgesehen, der von dem eingangsseitigen Spannungswandlerzweig 18a zu dem ausgangsseitigen Spannungswandlerzweig 18b, insbesondere dem Verbindungspunkt 22 zwischen den Schaltmitteln $S_5$ und $S_6$ führt. In dem Überbrückungspfad 39 ist ein Schaltelement, vorzugsweise ein ungesteuertes Schaltelement bspw. in Form einer Diode $D_8$ in Durchlassrichtung zu dem Verbindungspunkt 22 hin vorgesehen. Die Steuerungseinrichtung 29 weist hier eine zusätzliche Logik auf, die den Fall erfasst, wenn die Generatorspannung $U_{ZKL}$ stets zur Aufmagnetisierung der Drosselspulen $L_a$, $L_b$ ausreicht, insbesondere über dem Scheitelwert der Netzspannung $U_{NETZ}$ liegt. In diesem Fall wechselt die Steuerungseinrichtung 29 zu einer speziellen symmetrischen Vollbrückentaktung über, bei der sie jeweils gleichzeitig die Schalter $S_1$ und $S_5$ bei geschlossenem Schalter $S_4$ in der positiven Halbwelle bzw. $S_3$ und $S_6$ bei geschlossenem Schalter $S_2$ in der negativen Halbwelle hochfrequent taktet. Der Durchlasswiderstand der parallel bzw. synchron zueinander geschalteten Schalter ist verringert, so dass die vorhandenen Halbleiterbauelemente zur Erzielung geringerer Durchlassverluste in dem jeweiligen Betriebspunkt besser genutzt werden. Diese Maßnahme lässt sich auch bei der Schaltungsanordnung nach Fig. 1 verwenden.

Es ist ein Verfahren zur Umwandlung einer elektrischen Eingangsgleichspannung $U_{ZKL}$ in eine Wechselspannung $U_{NETZ}$ und eine Wechselrichterschaltung 1 offenbart, die eine Vollbrücke 3 mit Schaltern $S_1$-$S_4$ und Freilaufelementen $D_1$-$D_4$ sowie wenigstens eine Speicherdrossel L am Ausgang der Vollbrücke verwenden. Zur Erhöhung der Eingangsgleichspannung $U_{ZKL}$ ist eine Spannungswandlerschaltung 4 mit einem Hochsetzsteller 19 und zwei unterschiedlichen Spannungswandlerpfaden 37, 38 vorgesehen, die jeweils einen Schalter $S_5$, $S_6$ aufweisen, der den Ausgang des Hochsetzstellers 19 mit einem Mittelabgriff 16, 17 einer jeweiligen Halbbrücke 13, 14 der Vollbrücke 3 verbindet.

Erfindungsgemäß steuert eine Steuerungseinrichtung 29 bei ausreichender Eingangsspannung $U_{ZK1}$ in jeder Halbwelle der Wechselspannung $U_{NETZ}$ lediglich einen Schalter $S_1$, $S_3$ der Vollbrücke 3 pulsweitenmoduliert hochfrequent an, um zur Aufmagnetisierung der Speicherdrossel L die Eingangsspannung $U_{ZKL}$ an einem der Halbbrückenabgriffe 16, 17 anzulegen. Bei nicht ausreichender Eingangsspannung $U_{ZKL}$ schließt sie den Vollbrückenschalter $S_1$, $S_3$ und steuert statt dessen einen der Schalter $S_5$, $S_6$ der Spannungswandlerschaltung (4) hochfrequent an, so dass das erhöhte Ausgangspotenzial $U_{ZKH}$ des Hochsetzstellers 19 das Aufmagnetisierungspotenzial und die Eingangsspannung $U_{ZKL}$ das Freilaufpotenzial vorgibt. Der Aufmagnetisierungsstrom fließt unter Umgehung des normalerweise hochfrequent getakteten Vollbrückenschalters $S_1$, $S_3$ über einen der Spannungswandlerpfade 37, 38 unmittelbar zu dem zugehörigen Halbbrückenabgriff 16, 17. Neben geringen Ummagnetisierungs- und Schaltverlusten sind auch die Durchleitverluste minimiert und der gesamte Wirkungsgrad verbessert.

**Patentansprüche**

1.  Verfahren zur Umwandlung einer elektrischen Eingangsgleichspannung ($U_{ZKL}$) in eine Wechselspannung ($U_{NETZ}$) mittels einer Schaltungsanordnung (1), zu der eine an die Eingangsgleichspannung angeschlossene Vollbrückenschaltung (3), die zwei zueinander parallele Halbbrücken (13, 14) mit jeweils einem ersten Schaltelement ($S_1$, $S_3$) und einem in Reihe mit diesem verbundenen zweiten Schaltelement ($S_2$, $S_4$) aufweist, Freilaufelemente ($D_1$-$D_6$; $D_{13}$), die Freilaufpfade definieren, und wenigstens eine Speicherdrossel (L) gehören, die an einem Brückenabgriff (16) und einem Wechselspannungsanschluss (27) angeschlossen ist,
wobei die Schaltelemente ($S_1$-$S_4$) in Abhängigkeit von der Polarität der Halbwellen der Wechselspannung ($U_{NETZ}$) mit bestimmtem Taktmuster derart angesteuert werden, dass in einem normalen Betriebsmodus während einer Halbwelle jeweils ein erstes

Schaltelement ($S_1$; $S_3$) einer der Halbbrücken (13; 14) hochfrequent getaktet wird, während das zweite Schaltelement ($S_4$; $S_2$) der anderen Halbbrücke (14; 13) geschlossen ist und die anderen Schaltelemente geöffnet sind, so dass beim Schließen des ersten Schaltelementes ($S_1$; $S_3$) über dieses ein Aufmagnetisierungsstrom für die Speicherdrossel (L) bereitgestellt wird und beim Öffnen des ersten Schaltelementes durch ausgewählte Freilaufelemente ($D_2$; $D_4$) ein Freilaufstrom der Speicherdrossel (L) fließt, **gekennzeichnet durch** die Schritte

Anschließen einer Spannungswandlereinrichtung (19), die im Betrieb aus der Eingangsspannung ($U_{ZRL}$) ein betragsmäßig höheres Potenzial ($U_{ZKH}$) erzeugt, und wenigstens eines ansteuerbaren Schaltmittels ($S_5$; $S_6$) in einem Spannungswandlerpfad (37; 38), der im Nebenschluss zu wenigstens einem der hochfrequent getakteten ersten Schaltelemente ($S_1$; $S_3$) verläuft,
Erfassen von Betriebsbedingungen, um festzustellen, ob die Drossel (L) bei Anwendung des Taktmusters ausreichend aufmagnetisiert werden kann, und
für den Fall, dass festgestellt wird, dass die Drossel (L) nicht oder unzureichend aufmagnetisiert werden kann, Schließen des zuvor hochfrequent getakteten ersten Schaltelementes ($S_1$; $S_3$) und hochfrequentes Takten des ansteuerbaren Schaltmittels ($S_5$; $S_6$) in dem Spannungswandlerpfad (37; 38), so dass ein Aufmagnetisierungsstrom, der von dem betragsmäßig höheren Potenzial ($U_{ZKH}$) der Spannungswandlereinrichtung (19) herrührt, **durch** das Schaltmittel ($S_5$; $S_6$) unter Umgehung des ersten Schaltelementes ($S_1$; $S_3$) der Speicherdrossel (L) zugeführt wird, während in den Freilaufphasen der Freilaufstrom durch das erste Schaltelement ($S_1$; $S_3$) fließt.

2. Verfahren nach Anspruch 1, **dadurch gekennzeichnet, dass** die ersten Schaltelemente ($S_1$, $S_3$) der Vollbrückenschaltung (3) und das wenigstens eine ansteuerbare Schaltmittel ($S_5$; $S_6$) pulsweitenmoduliert im kHz-Bereich, vorzugsweise bei etwa 18 kHz oder mehr getaktet werden.

3. Verfahren nach Anspruch 1, **dadurch gekennzeichnet, dass** die ersten Schaltelemente ($S_1$, $S_3$) mittels wenigstens eines Stromschutzelementes ($D_1$, $D_2$; $D_{12}$) vor unzulässig hohen Rückwärtsströmen geschützt werden.

4. Verfahren nach Anspruch 3, **dadurch gekennzeichnet, dass** jedem ersten Schaltelement ($S_1$; $S_3$) ein ungesteuertes Stromschutzelement in Form einer Diode ($D_1$; $D_3$) zugeordnet ist, die in Reihe zwischen dem ersten Schaltelement ($S_1$) und einem Verbindungsknoten (16; 17) zwischen dem ersten und dem zweiten Schaltelement ($S_1$, $S_2$; $S_3$, $S_4$) angeordnet ist, der einen Mittelabgriff der jeweiligen Halbbrücke (13; 14) bildet.

5. Verfahren nach Anspruch 3, **dadurch gekennzeichnet, dass** den beiden ersten Schaltelementen ($S_1$, $S_3$) ein gemeinsames ungesteuertes Stromschutzelement in Form einer Diode ($D_{13}$) zugeordnet ist, die zwischen einem Gleichspannungsanschluss (7), an den die Spannungswandlereinrichtung (19) angeschlossen ist, und einem Verbindungspunkt zwischen den ersten Schaltelementen ($S_1$, $S_3$) angeordnet ist.

6. Verfahren nach Anspruch 3, **dadurch gekennzeichnet, dass** der Spannungswandlerpfad (37; 38) parallel zu der Reihenschaltung aus dem wenigstens einen Stromschutzelement ($D_1$, $D_3$; $D_{13}$) und dem zugehörigen ersten Schaltelement ($S_1$; $S_3$) angeschlossen ist.

7. Verfahren nach Anspruch 1 oder 6, **dadurch gekennzeichnet, dass** zwei Stromwandlerpfade (37, 38) vorgesehen sind, die jeweils ein Schaltmittel ($S_5$, $S_6$) aufweisen und von einem Ausgang der Spannungswandlereinrichtung (19) zu jeweils einem Mittelabgriff (16, 17) der Halbbrücken (13, 14) führen.

8. Verfahren nach Anspruch 1, **dadurch gekennzeichnet, dass** die Erzeugung eines betragsmäßig höheren Potenzials ($U_{ZKH}$) durch Regelung der Ausgangsspannung ($U_{ZKH}$) der Spannungswandlereinrichtung (19) bewerkstelligt wird.

9. Verfahren nach Anspruch 1, **dadurch gekennzeichnet, dass** die Spannungswandlereinrichtung (19) einen vorzugsweise induktiven DC/DC-Hochsetzsteller aufweist.

10. Verfahren nach Anspruch 1, **dadurch gekennzeichnet, dass** der Schritt der Erfassung von Betriebsbedingungen eine Erfassung eines Eingangsstroms ($I_{EIN}$) der Schaltungsanordnung, eines durch die Spannungswandlereinrichtung (19) fließenden Stroms ($I_{L_1}$), eines Ausgangsstroms ($I_L$) der Schaltungsanordnung, der eingangsseitigen Gleichspannung ($U_{ZKL}$), des Ausgangspotenzials ($U_{ZKH}$) der Spannungswandlereinrichtung und/oder der ausgangsseitigen Wechselspannung ($U_{NETZ}$) der Schaltungsanordnung aufweist.

11. Verfahren nach Anspruch 1, **dadurch gekennzeichnet, dass** der Schritt der Feststellung, ob die Drossel (L) bei Anwendung des Taktmusters ausreichend aufmagnetisiert werden kann, eine Bestimmung einer gewünschten mittleren Spannung ($\overline{U}_{BR}$) am Eingang der Drossel (L) und einen Vergleich dieser Spannung mit einem Referenzwert (REF) aufweist.

**12.** Verfahren nach Anspruch 11, **dadurch gekennzeichnet, dass** der Referenzwert (REF) ein variabler, in Abhängigkeit von momentanen Betriebsbedingungen anpassbarer Wert ist.

**13.** Verfahren nach Anspruch 11, **dadurch gekennzeichnet, dass** der Referenzwert durch den aktuellen Eingangsgleichspannungswert ($U_{ZKL}$) vorgegeben ist.

**14.** Verfahren nach Anspruch 1, **dadurch gekennzeichnet, dass** die Gleichspannung ($U_{ZKL}$) einer Gleichspannungsquelle (9) mit variablem Gleichspannungspotenzial, insbesondere einem Fotovoltaikgenerator, entnommen wird.

**15.** Verfahren nach Anspruch 1, **dadurch gekennzeichnet, dass** die Wechselspannung ($U_{NETZ}$) durch eine Netzspannung mit einer Frequenz von 50 oder 60 Hz gebildet ist.

**16.** Verfahren nach Anspruch 1, **dadurch gekennzeichnet, dass** im Bereich des Nulldurchgangs der Wechselspannung ($U_{NETZ}$) die Schaltmittel ($S_5$, $S_6$) und die zweiten Schaltelemente ($S_2$, $S_4$) asymmetrisch getaktet werden, um alternierende Stromflussrichtungen zu beherrschen.

**17.** Verfahren nach Anspruch 1, ferner die Schritte aufweisend:

Anordnen eines Überbrückungspfades (39) parallel zu der Spannungswandlereinrichtung (19), und
für den Fall, dass die Eingangsgleichspannung ($U_{ZKL}$) größer ist als der Scheitelwert der Wechselspannung ($U_{NETZ}$), simultanes hochfrequentes Takten des jeweiligen ersten Schaltelementes ($S_1$; $S_3$) einer der Halbbrücken (13; 14) gemeinsam mit dem wenigstens einen Schaltmittel ($S_5$; $S_6$) in dem zugehörigen Nebenschluss-Spannungswandlerpfad (37;38).

**18.** Wechselrichter zur Umwandlung einer elektrischen Gleichspannung in eine Wechselspannung
mit einem ersten und einem zweiten Gleichspannungszweig (11, 12), an die eine Gleichspannungsquelle (9) anschließbar ist, die eine Eingangsgleichspannung ($U_{ZKL}$) liefert,
mit einer Vollbrückenschaltung (3), die zwei zueinander parallele Halbbrücken (13, 14) mit jeweils einer Reihenanordnung aus einem ersten Schaltelement ($S_1$; $S_3$), das an dem ersten Gleichspannungszweig (11) angeschlossen ist, und einem zweiten Schaltelement ($S_2$, $S_4$), das an dem zweiten Gleichspannungszweig (12) angeschlossen ist, aufweist;
mit zwei Wechselspannungszweigen (24, 26), die jeweils mit einer der Halbbrücken (13, 14) zwischen dem ersten und dem zweiten Schaltelement ($S_1$, $S_2$; $S_3$, $S_4$) über einen Verbindungsknoten (16; 17) verbunden sind und zwei Wechselspannungsanschlüsse (27, 28) definieren; und
**gekennzeichnet durch** eine an die Gleichspannungszweige (11, 12) angeschlossene Spannungswandlerschaltung (4), die eine Spannungswandlereinrichtung (19) zur Hochsetzung der Eingangsgleichspannung ($U_{ZKL}$) auf ein betragsmäßig höheres Ausgangspotenzial ($U_{ZKH}$) und wenigstens ein ansteuerbares Schaltmittel ($S_5$; $S_6$) aufweist, das angeordnet und eingerichtet ist, um einen Ausgang der Spannungswandlereinrichtung (19) unmittelbar mit einem der Wechselspannungszweige (24, 26) zu verbinden.

**19.** Wechselrichter nach Anspruch 18, **dadurch gekennzeichnet, dass** er ein transformatorloser Fotovoltaik-Wechselrichter ist.

**20.** Wechselrichter nach Anspruch 18, **dadurch gekennzeichnet, dass** in wenigstens einem Wechselspannungszweig (24, 26), vorzugsweise in jedem Wechselspannungszweig, zwischen dem Verbindungsknoten (16, 17) und dem Wechselspannungsanschluss (27, 28) eine Speicherdrossel (L; $L_1$, $L_2$) angeordnet ist.

**21.** Wechselrichter nach Anspruch 20, **dadurch gekennzeichnet, dass** das wenigstens eine Schaltmittel ($S_5$, $S_6$) mit dem Verbindungsknoten (16, 17) einer Halbbrücke (13, 14) verbunden ist.

**22.** Wechselrichter nach Anspruch 18, **dadurch gekennzeichnet, dass** das wenigstens eine ansteuerbare Schaltmittel ($S_5$, $S_6$) eine antiparallel geschaltete Freilaufdiode ($D_5$, $D_6$) aufweist.

**23.** Wechselrichter nach Anspruch 18, **dadurch gekennzeichnet, dass** die Spannungswandlerschaltung (4) ein erstes und ein zweites Schaltmittel ($S_5$, $S_6$) aufweist, die mit dem Ausgang der Spannungswandlereinrichtung (19) und jeweils mit einem der Wechselspannungszweige (24, 26) verbunden sind.

**24.** Wechselrichter nach Anspruch 18, **dadurch gekennzeichnet, dass** die zweiten Schaltelemente ($S_2$, $S_4$) der Vollbrückenschaltung (3) eine antiparallel geschaltete Freilaufdiode ($D_2$, $D_4$) aufweisen.

**25.** Wechselrichter nach Anspruch 18, **dadurch gekennzeichnet, dass** in Reihe zu dem ersten Schal-

telement ($S_1$, $S_3$) einer jeden Halbbrücke (13, 14) ein ungesteuertes Stromschutzelement, vorzugsweise eine Schutzdiode ($D_1$, $D_3$) vorgesehen ist.

26. Wechselrichter nach Anspruch 18, **dadurch gekennzeichnet, dass** in dem ersten Gleichspannungszweig (11) ein ungesteuertes Stromschutzelement, insbesondere eine Diode ($D_{13}$), vorgesehen ist, dessen Ausgang an die Vollbrückenschaltung (3) angeschlossen ist.

27. Wechselrichter nach Anspruch 18, **dadurch gekennzeichnet, dass** die Spannungswandlereinrichtung (19) einen spannungserhöhenden induktiven Hochsetzsteller aufweist, dessen Ausgangspotenzial auf ein gewünschtes Niveau regelbar ist.

28. Wechselrichter nach Anspruch 18, **dadurch gekennzeichnet, dass** er eine Erfassungseinrichtung (30) zur Erfassung von Betriebsbedingungen und zur Bereitstellung hierfür kennzeichnender Signale sowie eine Steuerungseinrichtung (29) zur Auswertung der erfassten Signale und zur Ansteuerung der Schaltelemente und des wenigstens einen Schaltmittels mit einem bestimmten Schaltmuster aufweist.

29. Wechselrichter nach Anspruch 28, **dadurch gekennzeichnet, dass** die Erfassungseinrichtung (30) Mittel zur Erfassung eines Eingangsstroms des Wechselrichters ($I_{EIN}$), eines durch die Spannungswandlereinrichtung (19) fließenden Stroms ($I_{L_1}$) und eines Ausgangsstroms des Wechselrichters ($I_L$) sowie Mittel zur Erfassung der eingangsseitigen Gleichspannung ($U_{ZRL}$), des Ausgangspotenzials der Spannungswandlereinrichtung ($U_{ZKH}$) und der ausgangsseitigen Wechselspannung ($U_{NETZ}$) des Wechselrichters aufweist.

30. Wechselrichter nach Anspruch 28, **dadurch gekennzeichnet, dass** die Steuerungseinrichtung (29) im normalen Betrieb die ersten Schaltelemente ($S_1$, $S_3$) der Brückenschaltung (3) hochfrequent taktet, während sie die zweiten Schaltelemente mit einer Frequenz einer an den Wechselspannungsanschlüssen (27, 28) anliegenden Wechselspannung ($U_{NETZ}$) niederfrequent schaltet, wobei im normalen Betrieb während jeder halben Periode der Wechselspannung ($U_{NETZ}$) ein erstes Schaltelement ($S_1$, $S_3$) einer der Halbbrücken pulsweitenmoduliert angesteuert wird, während das zweite Schaltelement ($S_4$, $S_2$) der anderen Halbbrücke (13, 14) geschlossen ist.

31. Wechselrichter nach Anspruch 30, **dadurch gekennzeichnet, dass** die Steuerungseinrichtung (29) dazu eingerichtet ist, anhand der erfassten Signale Phasen zu bestimmen, in denen die eingangsseitige Gleichspannung ($U_{ZKL}$) zur Erzeugung der Wechselspannung ($U_{NETZ}$) nicht ausreicht und in diesen Phasen das wenigstens eine Schaltmittel ($S_5$, $S_6$) der Spannungswandlerschaltung (4) hochfrequent taktet, um ein Ausgangspotenzial ($U_{ZKH}$) der Spannungswandlereinrichtung (19) unmittelbar an einen Halbbrückenabgriff (16, 17) anzulegen und einen Aufmagnetisierungsstrom zur Aufmagnetisierung einer in einem Wechselspannungszweig (24, 26) vorgesehenen Speicherdrossel (L) unter Umgehung des ersten Schaltelementes ($S_1$; $S_3$) direkt dem Wechselspannungszweig (24, 26) zuzuführen.

32. Wechselrichter nach Anspruch 28, **dadurch gekennzeichnet, dass** die Steuerungseinrichtung (29) eine Logik aufweist, um im Bereich der Nulldurchgänge der Wechselspannung ($U_{NETZ}$) eine asymmetrische Taktung der Schaltmittel ($S_5$, $S_6$) und der zweiten Schaltelemente ($S_2$, $S_4$) zu bewirken.

33. Wechselrichter nach Anspruch 30, **dadurch gekennzeichnet, dass** in einem zu der Spannungswandlereinrichtung (19) parallelen Überbrückungspfad (39) ein ungesteuertes Schaltelement, vorzugsweise eine Diode ($D_8$), vorgesehen ist, und die Steuerungseinrichtung (29) eine Logik aufweist, um für den Fall, dass die eingangsseitige Gleichspannung ($U_{ZKL}$) größer ist als der Scheitelwert der Wechselspannung ($U_{NETZ}$), das jeweilige erste Schaltelement ($S_1$; $S_3$) einer der Halbbrücken (13; 14) gemeinsam mit dem wenigstens einen Schaltmittel ($S_5$; $S_6$) der Spannungswandlerschaltung (4) simultan hochfrequent zu takten.

**Claims**

1. Method for converting an electric input DC voltage ($U_{ZKL}$) into an AC voltage ($U_{NETZ}$) by means of a switch assembly (1), to which belong
a full-bridge circuit (3) connected to the input DC voltage and comprising two half-bridges (13, 14) which are parallel to each other and each have a first switching element ($S_1$, $S_3$) and a second switching element ($S_2$, $S_4$) that is connected in series to said first switching element ($S_1$, $S_3$),
flyback elements ($D_1$-$D_6$; $D_{13}$) defining flyback paths and at least one storage throttle (L) which is connected to a bridge tap (16) and to an AC voltage terminal (27),
wherein the switching elements ($S_1$-$S_4$) are actuated, depending on the polarity of the half-waves of the AC voltage ($U_{NETZ}$), with a defined pulse pattern in such a way that in a normal operating mode, during a half-wave respectively one first switching element ($S_1$; $S_3$) of one of the half-bridges (13; 14) is high-frequency pulsed while the second switching ele-

ment ($S_4$; $S_2$) of the other half-bridge (14; 13) is closed and the other switching elements are open, as a result of which, on closing the first switching element ($S_1$; $S_3$), a magnetising current for the storage throttle (L) is provided on closing the first switching element ($S_1$; $S_3$) via said first switching element ($S_1$; $S_3$) and on opening the first switching element a flyback current of the storage throttle (L) flows through selected flyback elements ($D_2$; $D_4$), **characterised by** the steps:

- Connecting a voltage converter device (19), which in operation generates from the input voltage ($U_{ZKL}$) a potential of greater absolute value ($U_{ZKH}$) and connecting at least one actuatable switching means ($S_5$; $S_6$) in a voltage converter path (37; 38) extending in a bypass to at least one of the high-frequency pulsed first switching elements ($S_1$; $S_3$),

- Capturing operating conditions to determine whether the throttle (L) is sufficiently magnetisable on application of the pulse pattern, and

- in case it is determined that the throttle (L) is not or insufficiently magnetisable, Closing the previously high-frequency pulsed first switching element ($S_1$; $S_3$) and high-frequency pulsing the actuatable switching means ($S_5$; $S_6$) in the voltage converter path (37; 38), as a result of which a magnetising current caused by the potential of greater absolute value ($U_{ZKH}$) of the voltage converter device (19) is fed to the storage throttle (L) by the switching means ($S_5$; $S_6$) while bypassing the first switching element ($S_1$; $S_3$), while in the flyback phases the flyback current flows through the first switching element ($S_1$; $S_3$).

2. Method according to claim 1, **characterised in that** the first switching elements ($S_1$, $S_3$) of the full-bridge circuit (3) and the at least one actuatable switching means ($S_5$; $S_6$) are pulsed in a pulse-width modulation fashion in the kHz range, preferably at approximately 18 kHz or more.

3. Method according to claim 1, **characterised in that** the first switching elements ($S_1$, $S_3$) are protected from inadmissibly high reverse currents by means of at least one current protection element ($D_1$, $D_2$; $D_{12}$).

4. Method according to claim 3, **characterised in that** to each first switching element ($S_1$, $S_3$) a non-controlled current protection element is allocated, which is implemented as a diode ($D_1$; $D_3$) arranged in series between the first switching element ($S_1$) and a connection node (16; 17) between the first and second switching elements ($S_1$, $S_2$; $S_3$, $S_4$), which forms a middle tap of the respective half-bridge (13; 14).

5. Method according to claim 3, **characterised in that** to the two first switching elements ($S_1$, $S_3$) a shared non-controlled current protection element is allocated, which is implemented as a diode ($D_{13}$) connected between a DC voltage terminal (7) which the voltage converter device (19) is connected to, and a connection point between the first switching elements ($S_1$, $S_3$).

6. Method according to claim 3, **characterised in that** the voltage converter path (37; 38) is connected in parallel to the series circuit of the at least one current protection element ($D_1$, $D_3$; $D_{13}$) and the corresponding first switching element ($S_1$, $S_3$).

7. Method according to claim 1 or 6, **characterised in that** two current converter paths (37, 38) are provided, each of which comprising a switching means ($S_5$, $S_6$) and leading from an output of the voltage converter device (19) to respectively one middle tap (16, 17) of the half-bridges (13, 14).

8. Method according to claim 1, **characterised in that** generation of a potential of greater absolute value ($U_{ZKH}$) is effected by regulating the output voltage ($U_{ZKH}$) of the voltage converter device (19).

9. Method according to claim 1, **characterised in that** the voltage converter device (19) comprises a preferably inductive DC/DC boost converter.

10. Method according to claim 1, **characterised in that** the step of capturing operating conditions comprises a capturing of an input current ($I_{EIN}$) of the switch assembly, of a current ($I_{L_1}$) flowing through the voltage converter device (19), of an output current ($I_L$) of the switch assembly, of the input-side DC voltage ($U_{ZKL}$), of the output potential ($U_{ZKH}$) of the voltage converter device and/or of the output-side AC voltage ($U_{NETZ}$) of the switch assembly.

11. Method according to claim 1, **characterised in that** the step of determining whether the throttle (L) is sufficiently magnetisable on application of the pulse pattern comprises determining a desired middle voltage ($\overline{U}_{BR}$) at the input of the throttle (L) and comprises comparing said voltage to a reference value (REF).

12. Method according to claim 11, **characterised in that** the reference value (REF) is a variable value that can be adapted depending on momentary operating conditions.

13. Method according to claim 11, **characterised in that** the reference value is given by the actual input DC voltage value ($U_{ZKL}$).

**14.** Method according to claim 1, **characterised in that** the DC voltage ($U_{ZKL}$) is retrieved from a DC voltage source (9) with a variable DC voltage potential, in particular from a photovoltaic generator.

**15.** Method according to claim 1, **characterised in that** the AC voltage ($U_{NETZ}$) is implemented by a grid voltage with a frequency of 50 or 60 Hz.

**16.** Method according to claim 1, **characterised in that** in the region of the AC voltage ($U_{NETZ}$) passing through zero the switching means ($S_5$, $S_6$) and the second switching elements ($S_2$, $S_4$) are asymmetrically pulsed for the purpose of mastering alternating current directions.

**17.** Method according to claim 1, further comprising the steps:

- Arranging a bridging path (39) in parallel to the voltage converter device (19) and,
- in case of the input DC voltage ($U_{ZKL}$) being greater than the peak value of the AC voltage ($U_{NETZ}$), simultaneous high-frequency pulsing of the respective first switching element ($S_1$; $S_3$) of one of the half-bridges (13; 14) together with the at least one switching means ($S_5$, $S_6$) in the corresponding bypass voltage converter path (37; 38).

**18.** Inverter for converting an electric DC voltage into an AC voltage

- with a first and a second DC voltage branch (11, 12) to which a DC voltage source (9) is connectable providing an input DC voltage ($U_{ZKL}$),
- with a full-bridge circuit (3) comprising two half-bridges (13, 14) which are parallel to each other and each comprise a series assembly of a first switching element ($S_1$; $S_3$), which is connected to the first DC voltage branch (11), and a second switching element ($S_2$; $S_4$), which is connected to the second DC voltage branch (12),
- with two AC voltage branches (24, 26) connected to respectively one of the half-bridges (13, 14) between the first and the second switching elements ($S_1$, $S_2$; $S_3$, $S_4$) via a connection node (16, 17) and defining two AC voltage terminals (27, 28) and **characterised by**

a voltage converter circuit (4) connected to the DC voltage branches (11, 12) and comprising a voltage converter device (19) for boosting the input DC voltage ($U_{ZKL}$) to an output potential of a greater absolute value ($U_{ZKH}$) and comprising at least one actuatable switching means ($S_5$; $S_6$) which is arranged and configured for connecting an output of the voltage converter device (19) directly to one of the AC voltage branches (24, 26).

**19.** Inverter according to claim 18, **characterised in that** it is a transformerless photovoltaic inverter.

**20.** Inverter according to claim 18, **characterised in that** in at least one AC voltage branch (24, 26), preferably in each AC voltage branch, a storage throttle (L; $L_1$, $L_2$) is arranged between the connection node (16, 17) and the AC voltage terminal (27, 28).

**21.** Inverter according to claim 20, **characterised in that** the at least one switching means ($S_5$, $S_6$) is connected to the connection node (16, 17) of a half-bridge (13, 14).

**22.** Inverter according to claim 18, **characterised in that** the at least one actuatable switching means ($S_5$, $S_6$) comprises a freewheeling diode ($D_5$, $D_6$) connected in antiparallel.

**23.** Inverter according to claim 18, **characterised in that** the voltage converter circuit (4) comprises a first and a second switching means ($S_5$, $S_6$), which are connected to the output of the voltage converter device (19) and are respectively connected to one of the AC voltage branches (24, 26).

**24.** Inverter according to claim 18, **characterised in that** the second switching elements ($S_2$, $S_4$) of the full-bridge circuit (3) comprise a flyback diode ($D_2$, $D_4$) connected in antiparallel.

**25.** Inverter according to claim 18, **characterised in that** a non-controlled current protection element, preferably a protective diode ($D_1$, $D_3$) is provided in series to the first switching element ($S_1$, $S_3$) of each half-bridge (13, 14).

**26.** Inverter according to claim 18, **characterised in that** in the first DC voltage branch (11) a non-controlled current protection element, in particular a diode ($D_{13}$), is provided, the output of which is connected to the full-bridge circuit (3).

**27.** Inverter according to claim 18, **characterised in that** the voltage converter device (19) comprises a voltage-boosting inductive boost converter, the output potential of which is adjustable to a desired level.

**28.** Inverter according to claim 18, **characterised in that** it comprises a capturing device (30) for capturing operating conditions and for providing signals that are characteristic therefor and comprising a control device (29) for evaluating the captured signals and for actuating the switching elements and the at least one switching means with a defined switching configuration.

**29.** Inverter according to claim 28, **characterised in that** the capturing device (30) comprises means for capturing an input current ($I_{EIN}$) of the inverter, a current ($I_{L1}$) flowing through the voltage converter device (19) and an output current ($I_L$) of the inverter as well as means for capturing the input-side DC voltage ($U_{ZKL}$ and the output-side AC voltage ($U_{NETZ}$) of the inverter.

**30.** Inverter according to claim 28, **characterised in that** in normal operation the control device (29) pulses the first switching elements ($S_1$, $S_3$) of the bridge circuit (3) at high frequency, while switching the second switching elements at a frequency of an AC voltage ($U_{NETZ}$) present at the AC voltage terminals (27, 28), wherein in normal operation during each half-period of the AC voltage ($U_{NETZ}$) a first switching element ($S_1$, $S_3$) of one of the half-bridges is actuated with a pulse-width modulation while the second switching element ($S_4$, $S_2$) of the other half-bridge (13, 14) is closed.

**31.** Inverter according to claim 30, **characterised in that** the control device (29) is configured to determine, on the basis of the captured signals, phases in which the input-side DC voltage ($U_{ZKL}$) is not sufficient for generating the AC voltage ($U_{NETZ}$), and pulses the at least one switching means ($S_5$, $S_6$) of the voltage converter circuit (4) at high frequency in such phases for the purpose of applying an output potential ($U_{ZKH}$) of the voltage converter device (19) directly to a half-bridge tap (16, 17) and feeding a magnetising current for magnetising a storage throttle (L) provided in an AC voltage branch (24, 26) directly to the AC voltage branch (24, 26) while bypassing the first switching element ($S_1$; $S_3$).

**32.** Inverter according to claim 28, **characterised in that** the control device (29) comprises a logic for effecting an asymmetrical pulsing of the switching means (S5, S6) and of the second switching elements ($S_2$; $S_4$) in the region of the AC voltage ($U_{NETZ}$) passing through zero.

**33.** Inverter according to claim 30, **characterised in that** a non-controlled switching element, preferably a diode (D8), is provided in a bridging path (39) parallel to the voltage converter device (19), and that the control device (29) comprises a logic for simultaneous high-frequency pulsing of the respective first switching element ($S_1$; $S_3$) of one of the half-bridges (13; 14) together with the at least one switching means ($S_5$; $S_6$) of the voltage converter circuit (4) in case of the input-side DC voltage ($U_{ZKL}$) being greater than the peak value of the AC voltage ($U_{NETZ}$).

**Revendications**

**1.** Procédé pour convertir une tension continue électrique d'entrée ($U_{ZKL}$) en une tension alternative ($U_{NETZ}$) par le biais d'un agencement de commutation (1), auquel appartiennent

un circuit de pont en H (3) relié à la tension continue d'entrée et comprenant deux demi-ponts (13 ; 14), lesquels sont parallèles l'un à l'autre et chacun desquels comporte un premier élément commutateur ($S_1$; $S_3$) et un deuxième élément commutateur ($S_2$, $S_4$) relié en série audit premier élément commutateur ($S_1$, $S_3$),

des éléments Flyback ($D_1$-$D_6$ ; $D_{13}$) définissant des chemins Flyback,

et au moins un self accumulateur (L) raccordé à une dérivation de pont (16) et à un borne de tension alternative (27),

les éléments commutateurs ($S_1$-$S_4$) étant actués, en dépendance à la polarité des demi-ondes de la tension alternative ($U_{NETZ}$), avec un modèle de cadence défini de cette façon que dans un mode opératif normal respectivement un premier élément commutateur ($S_1$ ; $S_3$) d'une des demi-ponts (13 ; 14) soit cadencé radioélectriquement pendant une demi-onde, tandis que le deuxième élément commutateur ($S_2$; $S_4$) de l'autre demi-pont (14 ; 13) soit fermé et les autres éléments commutateurs soient ouverts, de façon que, en cas de fermeture du premier élément commutateur ($S_1$ ; $S_3$), un courant réaimantant soit provisionné via celui-ci pour le self accumulateur (L) et, en cas d'ouverture du premier élément commutateur, un courant Flyback du self accumulateur (L) traverse des éléments Flyback ($D_2$ ; $D_4$) sélectionnés, **caractérisé par** les étapes :

Raccordement d'un dispositif de convertisseur de tension (19), lequel génère en opération de la tension d'entrée ($U_{ZKL}$) un potentiel ($U_{ZKH}$) de valeur absolue plus grande, et d'au moins un moyen commutateur actuable ($S_5$ ; $S_6$) dans un chemin de convertisseur de tension (37 ; 38) se déroulant en raccordement secondaire à au moins un des premiers éléments commutateurs ($S_1$ ; $S_3$) cadencés radioélectriquement, Captage des conditions opératoires pour déterminer si le self (L) peut être réaimanté suffisamment en appliquant le modèle de cadence, et en cas de qu'il est déterminé que le self (L) ne peut être réaimanté du tout ou seulement de façon insuffisante, Fermeture du premier élément commutateur ($S_1$ ; $S_3$) précédemment cadencé radioélectriquement et cadencement radioélectrique du moyen commutateur actuable ($S_5$ ; $S_6$) dans le chemin de convertisseur de tension (37 ; 38), de façon qu'un courant réaimantant dû au potentiel ($U_{ZKH}$) de valeur absolue plus grande du dispositif de convertisseur de tension (19) soit alimenté au self accumulateur (L) par le moyen commutateur ($S_5$ ; $S_6$) en esquivant le premier élément commutateur ($S_1$ ; $S_3$), tandis que dans les phases Flyback le courant Flyback traverse le premier élément commutateur ($S_1$ ; $S_3$).

2. Procédé selon la revendication 1, **caractérisé en ce que** les premiers éléments commutateurs ($S_1$ ; $S_3$) du circuit de pont en H (3) et l'au moins un moyen commutateur actuable ($S_5$ ; $S_6$) son cadencés de manière de modulation de largeur d'impulsions dans le range kHZ, de préférence à quelque 18 kHz ou plus.

3. Procédé selon la revendication 1, **caractérisé en ce que** les premiers éléments commutateurs ($S_1$ ; $S_3$) sont protégés contre des courants inversés d'une grandeur inadmissible par le biais d'au moins un élément de protection électrique ($D_1$, $D_2$ ; $D_{12}$).

4. Procédé selon la revendication 3, **caractérisé en ce qu'**au chacun premier élément commutateur ($S_1$ ; $S_3$) est alloué un élément de protection électrique non commandé en forme d'une diode ($D_1$ ; $D_3$) disposée en série entre le premier élément commutateur ($S_1$) et un noeud de raccordement (16 ; 17) entre le premier et le deuxième élément commutateur ($S_1$, $S_2$ ; $S_3$, $S_4$), lequel noeud de raccordement (16 ; 17) formant une dérivation centrale du demi-pont (13 ; 14) respectif.

5. Procédé selon la revendication 3, **caractérisé en ce qu'**aux deux premiers éléments commutateurs ($S_1$ ; $S_3$) est alloué un commun élément de protection électrique non commandé en forme d'une diode ($D_{13}$) connectée entre un borne de tension continue (7), auquel le dispositif de convertisseur de tension (19) est relié, et un point de raccordement entre les premiers éléments commutateurs ($S_1$ ; $S_3$).

6. Procédé selon la revendication 3, **caractérisé en ce que** le chemin de convertisseur de tension (37 ; 38) est raccordé en parallèle au circuit en série de l'au moins un élément de protection électrique ($D_1$, $D_3$ ; $D_{13}$) et le premier élément commutateur ($S_1$ ; $S_3$) correspondant.

7. Procédé selon la revendication 1 ou 6, **caractérisé en ce que** deux chemins de convertisseur de tension (37, 38) sont prévus, chacun desquels comportant un moyen commutateur ($S_5$ ; $S_6$) et menant d'une sortie du dispositif de convertisseur de tension (19) à respectivement une dérivation centrale (16, 17) des demi-ponts (13, 14).

8. Procédé selon la revendication 1, **caractérisé en ce que** la génération d'un potentiel ($U_{ZKH}$) de valeur absolue plus grande est effectuée par le biais d'une régulation de la tension de sortie ($U_{ZKH}$) du dispositif de convertisseur de tension (19).

9. Procédé selon la revendication 1, **caractérisé en ce que** le dispositif de convertisseur de tension (19) comporte un convertisseur élévateur DC/DC de préférence inductif.

10. Procédé selon la revendication 1, **caractérisé en ce que** l'étape du captage des conditions opératoires comprend un captage d'un courant d'entrée ($I_{EIN}$) de l'agencement de commutation, d'un courant ($I_{L1}$) traversant le dispositif de convertisseur de tension (19), d'un courant de sortie ($I_L$) de l'agencement de commutation, de la tension continue d'entrée ($U_{ZKL}$), du potentiel de sortie ($U_{ZKH}$) du dispositif de convertisseur de tension et/ou de la tension alternatif de sortie ($U_{NETZ}$) de l'agencement de commutation.

11. Procédé selon la revendication 1, **caractérisé en ce que** l'étape de déterminatation, si le self (L) peut être réaimanté suffisamment en appliquant le modèle de cadence, comprend une détermination d'une tension moyenne désirée ($\overline{U}_{BR}$) à l'entrée du self (L) et une comparaison de ladite tension à une valeur de référence (REF).

12. Procédé selon la revendication 11, **caractérisé en ce que** la valeur de référence (REF) est une valeur variable, laquelle peut être adaptée en dépendance à des conditions opératoires momentanées.

13. Procédé selon la revendication 11, **caractérisé en ce que** la valeur de référence est prédéfinie par la valeur actuelle de la tension continue d'entrée ($U_{ZKL}$).

14. Procédé selon la revendication 1, **caractérisé en ce que** la tension continue ($U_{ZKL}$) est obtenue d'une source de tension continue (9) ayant un potentiel de tension continue variable, notamment d'un générateur photovoltaïque.

15. Procédé selon la revendication 1, **caractérisé en ce que** la tension alternative ($U_{NETZ}$) est implémentée comme une tension de réseau ayant une fréquence de 50 ou 60 Hz.

16. Procédé selon la revendication 1, **caractérisé en ce que**, dans la zone du passage par zéro de la tension alternative ($U_{NETZ}$), les moyens commutateurs ($S_5$, $S_6$) et les deuxièmes éléments commutateurs ($S_2$, $S_4$) sont cadencés asymétriquement, pour maîtriser des sens de courant alternants.

**17.** Procédé selon la revendication 1, comprenant aussi les étapes :

Disposition d'un chemin de pontage (39) en parallèle au dispositif de convertisseur de tension (19) et,

en cas que la tension continue d'entrée ($U_{ZKL}$) est plus grand que la valeur de crête de la tension alternative ($U_{NETZ}$),

Cadencement radioélectrique simultané de chaque premier élément commutateur ($S_1$ ; $S_3$) d'un des demi-ponts (13 ; 14) conjointement avec l'au moins un moyen commutateur ($S_5$ ; $S_6$) dans le correspondant chemin de convertisseur de tension/raccordement secondaire (37 ; 38).

**18.** Onduleur pour convertir une tension électrique continue en une tension alternative

avec une première et une deuxième branche de tension continue (11, 12), à lesquelles une source de tension continue (9) peut être raccordée produisant une tension continue d'entrée ($U_{ZKL}$),

avec un circuit de pont en H (3) comportant deux demi-ponts (13, 14), lesquels sont parallèles l'un à l'autre et chacun desquels comprend respectivement un arrangement en série d'un premier élément commutateur ($S_1$, $S_3$) raccordé à la première branche de tension continue (11) et d'un deuxième élément commutateur ($S_2$, $S_4$) raccordé à la deuxième branche de tension continue (12) ;

avec deux branches de tension alternative (24, 26), lesquels étant respectivement reliées à un des demi-ponts (13, 14) entre le premier et le deuxième élément commutateur ($S_1$; $S_2$; $S_3$; $S_4$) par le biais d'un noeud de raccordement (16 ; 17) et définissant deux bornes de tension alternative (27, 28) ; et **caractérisé par**

un circuit de convertisseur de tension (4) raccordé à les branches de tension continue (11, 12) et comportant un dispositif de convertisseur de tension (19) pour élever la tension continue d'entrée ($U_{ZKL}$) à un potentiel de sortie ($U_{ZKH}$) de valeur absolue plus grande, et comportant au moins un moyen commutateur actuable ($S_5$ ; $S_6$), lequel est disposé et configuré à directement relier une sortie du dispositif de convertisseur de tension (19) avec une des branches de tension alternative (24, 26).

**19.** Onduleur selon la revendication 18, **caractérisé en ce qu'**il est un onduleur photovoltaïque sans transformateur.

**20.** Onduleur selon la revendication 18, **caractérisé en ce que** dans au moins une branche de tension alternative (24, 26), de préférence dans chacune des branches de tension alternative, un self accumulateur ($L$ ; $L_1$, $L_2$) est disposé entre le noeud de raccordement (16, 17) et le borne de tension alternative (27, 28).

**21.** Onduleur selon la revendication 20, **caractérisé en ce que** l'au moins un moyen commutateur ($S_5$ ; $S_6$) est relié avec le noeud de raccordement (16, 17) d'un demi-pont (13, 14).

**22.** Onduleur selon la revendication 18, **caractérisé en ce que** l'au moins un moyen commutateur actuable ($S_5$ ; $S_6$) comporte une diode Flyback ($D_5$, $D_6$) connectée en anti-parallèle.

**23.** Onduleur selon la revendication 18, **caractérisé en ce que** le circuit de convertisseur de tension (4) comporte un premier et un deuxième moyen commutateur ($S_5$ ; $S_6$), lesquels sont reliés à la sortie du dispositif de convertisseur de tension (19) et sont respectivement reliés à une des branches de tension alternative (24, 26).

**24.** Onduleur selon la revendication 18, **caractérisé en ce que** les deuxièmes éléments commutateurs ($S_2$, $S_4$) du circuit de pont en H (3) comportent une diode Flyback ($D_2$, $D_4$) connectée en anti-parallèle.

**25.** Onduleur selon la revendication 18, **caractérisé en ce qu'**un élément de protection électrique non commandé, de préférence une diode protective ($D_1$, $D_3$), est prévu en série avec le premier élément commutateur ($S_1$, $S_3$) de chaque demi-pont (13, 14).

**26.** Onduleur selon la revendication 18, **caractérisé en ce que** dans la première branche de tension continue (11) un élément de protection électrique non commandé, de préférence une diode ($D_{13}$), est prévu, la sortie duquel est reliée au circuit de pont en H (3).

**27.** Onduleur selon la revendication 18, **caractérisé en ce que** le dispositif de convertisseur de tension (19) comporte un convertisseur élévateur inductif élévant la tension, le potentiel de sortie duquel peut être régulé à un niveau désiré.

**28.** Onduleur selon la revendication 18, **caractérisé en ce qu'**il comporte un dispositif de captage (30) pour capturer des conditions opératoires et pour produire des signaux caractérisant lesdites conditions opératoires et comporte un dispositif de commande (29) pour évaluer les signaux capturés et pour actuer les éléments commutateurs et l'au moins un moyen commutateur avec une configuration de commutation définie.

**29.** Onduleur selon la revendication 28, **caractérisé en ce que** le dispositif de captage (30) comporte des moyens pour captage d'un courant d'entrée de l'onduleur ($I_{EIN}$), d'un courant ($I_{L1}$) traversant le dispositif de convertisseur de tension (19) et d'un courant de sortie de l'onduleur ($I_L$), et comporte aussi des moyens pour captage de la tension continue d'entrée ($U_{ZKL}$), du potentiel de sortie ($U_{ZKH}$) du dispositif de convertisseur de tension et de la tension alternative de sortie ($U_{NETZ}$) de l'onduleur.

30. Onduleur selon la revendication 28, **caractérisé en ce que** le dispositif de commande (29) cadence dans l'opération normale les premiers éléments commutateurs ($S_1$, $S_3$) du circuit de pont (3) radioélectriquement, tandis qu'il connecte les deuxièmes éléments commutateurs de manière basse-fréquente avec une fréquence d'une tension alternative ($U_{NETZ}$) appliquée aux bornes de tension alternative (27, 28), un premier élément commutateur ($S1$, $S_3$) d'une des demi-ponts étant actué dans l'opération normale de manière de modulation de largeur d'impulsions durant chaque demi-période de la tension alternative ($U_{NETZ}$), tandis que le deuxième élément commutateur ($S_4$, $S_2$) de l'autre demi-pont (13, 14) est fermé.

31. Onduleur selon la revendication 30, **caractérisé en ce que** le dispositif de commande (29) est configuré à déterminer, par le biais des signaux capturés, des phases dans lesquelles la tension continue d'entrée ($U_{ZKL}$) ne suffit pas pour générer la tension alternative ($U_{NETZ}$), et qu'il cadence dans ces phases l'au moins un moyen commutateur ($S_5$, $S_6$) du circuit de convertisseur de tension (4) radioélectriquement pour appliquer un potentiel de sortie ($U_{ZKH}$) du dispositif de convertisseur de tension (19) directement à une dérivation de demi-pont (16, 17) et pour alimenter un courant réaimantant directement à la branche de tension alternative (24, 26), en esquivant le premier élément commutateur ($S_1$, $S_3$), pour réaimanter un self accumulateur (L) prévu dans une branche de tension alternative (24, 26).

32. Onduleur selon la revendication 28, **caractérisé en ce que** le dispositif de commande (29) comprend une logique pour effectuer dans la zone des passages par zéro de la tension alternative ($U_{NETZ}$) un cadencement asymétrique des moyens commutateurs ($S_5$, $S_6$) et des deuxièmes éléments commutateurs ($S_2$, $S_4$).

33. Onduleur selon la revendication 30, **caractérisé en ce que**, dans un chemin de pontage (39) parallèle au dispositif de convertisseur de tension (19), un élément commutateur électrique non commandé, de préférence une diode ($D_8$), est prévu et que le dispositif de commande (29) comprend une logique pour, au cas que la tension continue d'entrée ($U_{ZKL}$) est plus grande que la valeur de crête de la tension alternative ($U_{NETZ}$), cadencer le premier élément commutateur ($S1$ ; $S3$) respectif d'une des demi-ponts (13 ; 14) conjointement avec l'au moins un moyen commutateur ($S_5$, $S_6$) du circuit de convertissement de tension (4) simultanément et radioélectriquement.

Fig.1

Fig.2

Fig.4

Fig.3a

Fig.3b

**IN DER BESCHREIBUNG AUFGEFÜHRTE DOKUMENTE**

**In der Beschreibung aufgeführte Patentdokumente**

- DE 10221592 A1
- DE 10020537 A1